(19) Europäisches Patentamt
European Patent Office
Office européen des brevets

(11) **EP 4 663 667 A1**

(12) **EUROPEAN PATENT APPLICATION**
published in accordance with Art. 153(4) EPC

(43) Date of publication:
**17.12.2025 Bulletin 2025/51**

(21) Application number: **24756921.3**

(22) Date of filing: **14.02.2024**

(51) International Patent Classification (IPC):
***C08F 6/16*** *(2006.01)* ***C08F 8/06*** *(2006.01)*
***C08F 14/26*** *(2006.01)*

(52) Cooperative Patent Classification (CPC):
**C08F 6/16; C08F 8/06; C08F 14/26**

(86) International application number:
**PCT/JP2024/005063**

(87) International publication number:
**WO 2024/172080 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023 JP 2023022876**

(71) Applicant: **Daikin Industries, Ltd.**
**Osaka-shi, Osaka 530-0001 (JP)**

(72) Inventors:
- **HIGASHI, Chisato**
  **Osaka-Shi, Osaka 530-0001 (JP)**
- **TSUJI, Masayuki**
  **Osaka-Shi, Osaka 530-0001 (JP)**
- **KUBOUCHI, Masaki**
  **Osaka-Shi, Osaka 530-0001 (JP)**
- **HORITA, Hideki**
  **Osaka-Shi, Osaka 530-0001 (JP)**
- **MASUDA, Eiji**
  **Osaka-Shi, Osaka 530-0001 (JP)**
- **TAIRA, Takahiro**
  **Osaka-Shi, Osaka 530-0001 (JP)**
- **HIROMOTO, Jiro**
  **Osaka-Shi, Osaka 530-0001 (JP)**
- **YAMANO, Masashi**
  **Osaka-Shi, Osaka 530-0001 (JP)**
- **ARAKI, Yuta**
  **Osaka-Shi, Osaka 530-0001 (JP)**
- **FUKUI, Kosuke**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) METHOD FOR PRODUCING LOW MOLECULAR WEIGHT POLYTETRAFLUOROETHYLENE AQUEOUS DISPERSION

(57) Provided is a production method comprising: polymerizing tetrafluoroethylene in the presence of a fluorine-containing surfactant, a polymerization initiator, a hydrocarbon chain transfer agent, and an aqueous medium to prepare an aqueous dispersion containing low molecular weight polytetrafluoroethylene; after preparing the aqueous dispersion, carrying out a pretreatment of the aqueous dispersion; and adding a radical generator to the pretreated aqueous dispersion and subjecting the aqueous dispersion containing the radical generator to a heat treatment, thereby obtaining an aqueous dispersion of low molecular weight polytetrafluoroethylene.

Figure 1

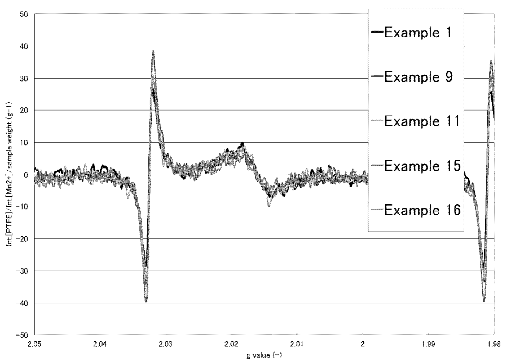


EP 4 663 667 A1

## Description

TECHNICAL FIELD

The present disclosure relates to a method for producing a low molecular weight polytetrafluoroethylene aqueous dispersion.

BACKGROUND ART

Patent Document 1 discloses a fluoropolymer composition production method for producing a fluoropolymer composition containing a fluoropolymer, the method comprising: polymerizing a fluoromonomer in a reactor in the presence of a fluorine-containing surfactant, a polymerization initiator, and an aqueous medium to prepare an aqueous dispersion containing a fluoropolymer; after preparing the aqueous dispersion, removing from the reactor the fluoromonomer remaining in the reactor, or recovering the aqueous dispersion in the reactor and accommodating the aqueous dispersion in a container different from the reactor; adding a radical generator to the aqueous dispersion; and subjecting the aqueous dispersion containing the radical generator to a heat treatment, thereby obtaining a fluoropolymer composition.

Patent Document 2 discloses a fluoropolymer composition production method for producing a fluoropolymer composition containing a fluoropolymer, the method comprising: polymerizing a fluoromonomer in a reactor in the presence of a fluorine-containing surfactant, a polymerization initiator, and an aqueous medium to prepare an aqueous dispersion containing a fluoropolymer; feeding an inert gas into the reactor; and subjecting the aqueous dispersion in the reactor to a heat treatment, thereby obtaining a fluoropolymer composition.

RELATED ART

PATENT DOCUMENTS

Patent Document 1: International Publication No. WO 2022/163814
Patent Document 2: International Publication No. WO 2022/163815

SUMMARY OF THE INVENTION

PROBLEM TO BE SOLVED BY THE INVENTION

An object of the present disclosure is to provide a method for producing a low molecular weight polytetrafluoroethylene aqueous dispersion, having a reduced content of a fluorine-containing compound having a hydrophilic group.

MEANS FOR SOLVING THE PROBLEM

The present disclosure provides a method for producing a low molecular weight polytetrafluoroethylene aqueous dispersion, the method comprising: polymerizing tetrafluoroethylene in the presence of a fluorine-containing surfactant, a polymerization initiator, a hydrocarbon chain transfer agent, and an aqueous medium to prepare an aqueous dispersion containing a low molecular weight polytetrafluoroethylene; subjecting the resulting aqueous dispersion to a pretreatment; and adding a radical generator to a pretreated aqueous dispersion and subjecting an aqueous dispersion containing the radical generator to a heat treatment, thereby obtaining the low molecular weight polytetrafluoroethylene aqueous dispersion.

EFFECTS OF INVENTION

The present disclosure can provide a method for producing a low molecular weight polytetrafluoroethylene aqueous dispersion, having a reduced content of a fluorine-containing compound having a hydrophilic group.

BRIEF DESCRIPTION OF DRAWING

Figure 1 shows first derivative spectra obtained by analyzing aqueous dispersions obtained in Examples 1, 9, 11, 15, and 16 using electron spin resonance spectroscopy.

DESCRIPTION OF EMBODIMENTS

Before describing the present disclosure in detail, some terms used in the present disclosure will now be defined or described.

The melt-fabricable as used herein means that a polymer has an ability to be processed in a molten state using a conventional processing device such as an extruder or an injection molding machine. Accordingly, a melt-fabricable fluororesin usually has a melt flow rate of 0.01 to 500 g/10 min as measured by the measurement method described below.

Polytetrafluoroethylene (PTFE) as used herein is preferably a fluoropolymer having a tetrafluoroethylene unit content of 99 mol% or more based on all polymerization units.

The content of each of the monomers constituting the fluoropolymer can be calculated herein by any appropriate combination of NMR, FT-IR, elemental analysis, X-ray fluorescence analysis in accordance with the type of monomer.

The "organic group" as used herein means a group containing one or more carbon atoms or a group formed by removing one hydrogen atom from an organic compound. The organic group is preferably an alkyl group optionally having one or more substituents.

A range indicated by endpoints as used herein includes all numerical values within the range (for example, the range of 1 to 10 includes 1.4, 1.9, 2.33, 5.75, 9.98, and the like).

The phrase "at least one" as used herein includes all numerical values equal to or greater than 1 (for example, at least 2, at least 4, at least 6, at least 8, at least 10, at least 25, at least 50, at least 100, and the like).

Hereinafter, specific embodiments of the present disclosure will now be described in detail, but the present disclosure is not limited to the following embodiments.

In Patent Document 1 and Patent Document 2, the above-described production methods are proposed as a production method capable of producing a fluoropolymer composition in which the content of the fluorine-containing surfactant used when polymerizing a fluoromonomer and the content of a fluorine-containing compound produced by polymerization of the fluoromonomer are reduced.

However, there is a demand for a method for reducing the content of a fluorine-containing compound having a hydrophilic group in an aqueous dispersion of low molecular weight polytetrafluoroethylene, by a means different from conventional production methods.

In the production method of the present disclosure, tetrafluoroethylene is polymerized in the presence of a fluorine-containing surfactant, a polymerization initiator, a hydrocarbon chain transfer agent, and an aqueous medium to prepare an aqueous dispersion containing a low molecular weight polytetrafluoroethylene; after preparing the aqueous dispersion, a pretreatment of the aqueous dispersion is carried out; and a radical generator is added to a pretreated aqueous dispersion, and an aqueous dispersion containing the radical generator is subjected to a heat treatment, thereby obtaining the low molecular weight polytetrafluoroethylene aqueous dispersion.

Hereinafter, the steps and the materials used in the steps will now be described in detail.

(Polymerization of tetrafluoroethylene)

In the production method of the present disclosure, first, tetrafluoroethylene is polymerized in the presence of a fluorine-containing surfactant, a polymerization initiator, a hydrocarbon chain transfer agent, and an aqueous medium to prepare an aqueous dispersion containing low molecular weight polytetrafluoroethylene.

Tetrafluoroethylene can be polymerized in a reactor. Polymerization of tetrafluoroethylene can be carried out by, for example, charging a reactor with tetrafluoroethylene, a fluorine-containing surfactant, a polymerization initiator, an aqueous medium, and optionally other additives, stirring the contents of the reactor, retaining the reactor at a predetermined polymerization temperature, and then adding a predetermined amount of a polymerization initiator to initiate the polymerization reaction. After the polymerization reaction is initiated, tetrafluoroethylene, the polymerization initiator, the fluorine-containing surfactant, a chain transfer agent, and the like may be further added depending on the purpose. The method for polymerizing tetrafluoroethylene is not limited, and is preferably an emulsion polymerization method.

(Fluorine-containing surfactant)

As for the fluorine-containing surfactant used in the polymerization of tetrafluoroethylene, the fluorine-containing surfactant may be a fluorine-containing surfactant commonly used in the polymerization of tetrafluoroethylene. A typical compound as the fluorine-containing surfactant is a fluorine-containing surfactant having a molecular weight of 1,000 g/mol or less and preferably 800 g/mol or less.

The fluorine-containing surfactant is not limited as long as it is a surfactant containing at least one fluorine atom, and conventionally known fluorine-containing surfactants can be used.

Examples of the fluorine-containing surfactant include anionic fluorine-containing surfactants. The anionic fluorine-containing surfactant may be, for example, a fluorine atom-containing surfactant having 20 or fewer carbon

atoms in total in the portion excluding the anionic group.

The fluorine-containing surfactant may also be a fluorine-containing surfactant in which the molecular weight of the anionic moiety is 1,000 or less.

The "anionic moiety" means a portion of the fluorine-containing surfactant excluding the cation. For example, in the case of $F(CF_2)_{n1}COOM$ represented by formula (I), which will be described below, the anionic moiety is the "$F(CF_2)_{n1}COO$" portion.

Examples of the fluorine-containing surfactant also include fluorine-containing surfactants having a Log POW of 3.5 or less. The Log POW is a partition coefficient between 1-octanol and water, which is represented by Log P (wherein P represents the ratio between the concentration of the fluorine-containing surfactant in octanol and the concentration of the fluorine-containing surfactant in water in a phase-separated octanol/water (1:1) liquid mixture containing the fluorine-containing surfactant).

The Log POW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6% by mass $HClO_4$ solution =1/1 (vol/vol %), flow rate: 1.0 ml/min, sample volume: 300 μL, column temperature: 40°C, detection light: UV 210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

Examples of the anionic fluorine-containing surfactant include a compound represented by the following general formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group having 3 to 20 carbon atoms in which some or all of H are replaced by F, the alkylene group optionally containing one or more ether bonds in which some of H are optionally replaced by Cl; and $Y^0$ is an anionic group.

The anionic group $Y^0$ may be -COOM, $-SO_2M$, or $-SO_3M$, and may be -COOM or $-SO_3M$.

M is H, a metal atom, $NR^7_4$, optionally substituted imidazolium, optionally substituted pyridinium, or optionally substituted phosphonium, and $R^7$ is H or an organic group.

Examples of the metal atom include alkali metals (Group 1) and alkaline earth metals (Group 2), such as Na, K, or Li.

$R^7$ may be H or a $C_{1-10}$ organic group, may be H or a $C_{1-4}$ organic group, and may be H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

In the $Rf^{n0}$, 50% or more of H atoms may be replaced by fluorine atoms.

Examples of the compound represented by general formula ($N^0$) include a compound represented by the following general formula ($N^1$):

$$X^{n0}\text{-}(CF_2)_{m1}\text{-}Y^0 \qquad (N^1)$$

wherein $X^{n0}$ is H, Cl, or F; m1 is an integer of 3 to 15; and $Y^0$ is as defined above;

a compound represented by the following general formula ($N^2$) :

$$Rf^{n1}\text{-}O\text{-}(CF(CF_3)CF_2O)_{m2}CFX^{n1}\text{-}Y^0 \qquad (N^2)$$

wherein $Rf^{n1}$ is a perfluoroalkyl group having 1 to 5 carbon atoms; m2 is an integer of 0 to 3; $X^{n1}$ is F or $CF_3$; and $Y^0$ is as defined above;

a compound represented by the following general formula ($N^3$) :

$Rf^{n2}(CH_2)_{m3}-(Rf^{n3})_q-Y^0$ $(N^3)$

wherein $Rf^{n2}$ is a partially or fully fluorinated alkyl group having 1 to 13 carbon atoms and optionally containing an ether bond and/or a chlorine atom; m3 is an integer of 1 to 3; $Rf^{n3}$ is a linear or branched perfluoroalkylene group having 1 to 3 carbon atoms, q is 0 or 1; and $Y^0$ is as defined above;
a compound represented by the following general formula $(N^4)$ :

$Rf^{n4}-O-(CY^{n1}Y^{n2})_pCF_2-Y^0$ $(N^4)$

wherein $Rf^{n4}$ is a linear or branched, partially or fully fluorinated alkyl group having 1 to 12 carbon atoms and optionally containing an ether bond; $Y^{n1}$ and $Y^{n2}$ are the same or different and are each independently H or F; p is 0 or 1; and $Y^0$ is as defined above; and
a compound represented by the following general formula $(N^5)$ :

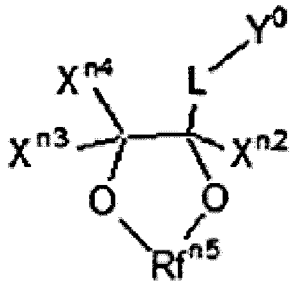

$(N^5)$

wherein $X^{n2}$, $X^{n3}$, and $X^{n4}$ may be the same or different and are each independently H, F, or a linear or branched, partially or fully fluorinated alkyl group having 1 to 6 carbon atoms and optionally containing an ether bond; $Rf^{n5}$ is a linear or branched partially or fully fluorinated alkylene group having 1 to 3 carbon atoms and optionally containing an ether bond; L is a linking group; and $Y^0$ is as defined above, provided that the total number of carbon atoms in $X^{n2}$, $X^{n3}$, $X^{n4}$, and $Rf^{n5}$ is 18 or less.

More specific examples of the compound represented by the above general formula $(N^0)$ include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is a compound represented by the following general formula (I):

$F(CF_2)_{n1}COOM$ (I)

wherein n1 is an integer of 3 to 13; and M is H, a metal atom, $NR^7_4$, optionally substituted imidazolium, optionally substituted pyridinium, or optionally substituted phosphonium, wherein $R^7$ is H or an organic group.

The ω-H perfluorocarboxylic acid (II) described above is represented by the following general formula (II):

$H(CF_2)_{n2}COOM$ (II)

wherein n2 is an integer of 4 to 15; and M is as defined above.

The perfluoroethercarboxylic acid (III) is represented by the following general formula (III):

$Rf^1-O-(CF(CF_3)CF_2O)_{n3}CF(CF_3)COOM$ (III)

wherein $Rf^1$ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

$$Rf^2(CH_2)_{n4}Rf^3COOM \qquad (IV)$$

wherein $Rf^2$ is a perfluoroalkyl group having 1 to 5 carbon atoms; $Rf^3$ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

$$Rf^4\text{-O-}CY^1Y^2CF_2\text{-COOM} \qquad (V)$$

wherein $Rf^4$ is a linear or branched partially or fully fluorinated alkyl group having 1 to 12 carbon atoms and optionally containing an ether bond and/or a chlorine atom; $Y^1$ and $Y^2$ are the same or different and are each H or F; and M is as defined above.

The perfluoroalkylsulfonic acid (VI) is represented by the following general formula (VI):

$$F(CF_2)_{n5}SO_3M \qquad (VI)$$

wherein n5 is an integer of 3 to 14; and M is as defined above.

The ω-H perfluorosulfonic acid (VII) is represented by the following general formula (VII):

$$H(CF_2)_{n6}SO_3M \qquad (VII)$$

wherein n6 is an integer of 4 to 14; and M is as defined above.

The perfluoroalkylalkylenesulfonic acid (VIII) is represented by the following general formula (VIII):

$$Rf^5(CH_2)_{n7}SO_3M \qquad (VIII)$$

wherein $Rf^5$ is a perfluoroalkyl group having 1 to 13 carbon atoms; n7 is an integer of 1 to 3; and M is as defined above.

The alkylalkylenecarboxylic acid (IX) is represented by the following general formula (IX):

$$Rf^6(CH_2)_{n8}COOM \qquad (IX)$$

wherein $Rf^6$ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the following general formula (X):

$$Rf^7\text{-O-}Rf^8\text{-O-}CF_2\text{-COOM} \qquad (X)$$

wherein $Rf^7$ is a linear or branched, partially or fully fluorinated alkyl group having 1 to 6 carbon atoms and optionally containing an ether bond and/or a chlorine atom; $Rf^8$ is a linear or branched, partially or fully fluorinated alkyl group having 1 to 6 carbon atoms; and M is as defined above.

The alkoxyfluorosulfonic acid (XI) is represented by the following general formula (XI):

$$Rf^9\text{-O-}CY^1Y^2CF_2\text{-}SO_3M \qquad (XI)$$

wherein $Rf^9$ is a linear or branched partially or fully fluorinated alkyl group having 1 to 12 carbon atoms and optionally containing an ether bond and optionally containing chlorine; $Y^1$ and $Y^2$ are the same or different and are each H or F; and M is as defined above.

The compound (XII) is represented by the following general formula (XII):

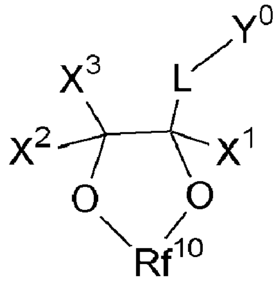

(X I I)

wherein $X^1$, $X^2$, and $X^3$ may be the same or different and are H, F, and a linear or branched partially or fully fluorinated alkyl group having 1 to 6 carbon atoms and optionally containing an ether bond; $Rf^{10}$ is a perfluoroalkylene group having 1 to 3 carbon atoms; L is a linking group; and $Y^0$ is an anionic group.

$Y^0$ may be -COOM, $-SO_2M$, or $-SO_3M$, and may be $-SO_3M$ or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

$$Rf^{11}\text{-O-}(CF_2CF(CF_3)O)_{n9}(CF_2O)_{n10}CF_2COOM \qquad \text{(XIII)}$$

wherein $Rf^{11}$ is a fluoroalkyl group having 1 to 5 carbon atoms and containing chlorine; n9 is an integer of 0 to 3; n10 is an integer of 0 to 3; and M is as defined above. An example of the compound (XIII) is $CF_2ClO(CF_2CF(CF_3)O)_{n9}(CF_2O)_{n10}CF_2COONH_4$ (a mixture having an average molecular weight of 750, n9 and n10 in the formula are as defined above).

As described above, examples of the anionic fluorine-containing surfactant include a carboxylic acid-based surfactant and a sulfonic acid-based surfactant.

The fluorine-containing surfactant may be one fluorine-containing surfactant, or may be a mixture containing two or more fluorine-containing surfactants.

The fluorine-containing surfactant preferably does not have a methylene group ($-CH_2-$), and more preferably does not have a C-H bond. The use of a fluorine-containing surfactant that does not have a methylene group ($-CH_2-$) or a C-H bond within the molecule enables tetrafluoroethylene to be smoothly polymerized in the presence of an aqueous medium.

The number of H atoms that the hydrophobic group of the fluorine-containing surfactant has is preferably 0 or 1, and more preferably 0. The use of a fluorine-containing surfactant in which the number of H atoms bonded to carbon atoms constituting the hydrophobic group is small enables tetrafluoroethylene to be smoothly polymerized in the presence of an aqueous medium. The number of carbon atoms in the hydrophobic group of the fluorine-containing surfactant having a hydrophobic group and a hydrophilic group is preferably 1 to 50, more preferably 3 to 20, and even more preferably 6 to 12. The hydrophobic group usually constitutes the above-described "portion excluding the anionic group" in the molecular structure of the fluorine-containing surfactant. Examples of the hydrophilic group include groups exemplified as the anionic group $Y^0$. The fluorine-containing surfactant may be a saturated fluorinated surfactant in which all carbon atoms bonded to the hydrophobic group are substituted with fluorine atoms.

Examples of fluorine-containing surfactants, among the above-described anionic fluorine-containing surfactants, include compounds represented by general formula ($N^1$), compounds represented by general formula ($N^2$), and compounds represented by general formula ($N^4$):

$$Rf^{n4}\text{-O-}(CY^{n1}F)_pCF_2\text{-}Y^0 \qquad (N^4)$$

wherein $Rf^{n4}$ is a linear or branched, partially or fully fluorinated alkyl group having 1 to 12 carbon atoms and optionally containing an ether bond (provided that those having $-CH_2-$ are excluded), $Y^{n1}$ is H or F, p is 0 or 1, and $Y^0$ is as defined above; and compounds represented by general formula ($N^5$):

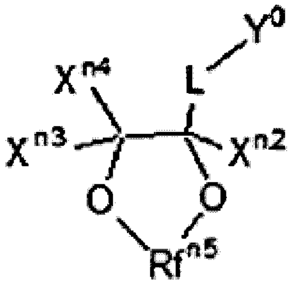

(N 5)

wherein $X^{n2}$, $X^{n3}$, and $X^{n4}$ may be the same or different and are each independently H, F, or a linear or branched, partially or fully fluorinated alkyl group having 1 to 6 carbon atoms and optionally containing an ether bond (provided that those having $-CH_2-$ are excluded), provided that $X^{n3}$ and $X^{n4}$ are not simultaneously H; $Rf^{n5}$ is a linear or branched, partially or fully fluorinated alkylene group having 1 to 3 carbon atoms and optionally containing an ether bond (provided that those having $-CH_2-$ are excluded); L is a linking group; and $Y^0$ is as defined above, provided that the total number of carbon atoms in $X^{n2}$, $X^{n3}$, $X^{n4}$, and $Rf^{n5}$ is 18 or less.

Among the above-described anionic fluorine-containing surfactants, the fluorine-containing surfactant is preferably at least one selected from the group consisting of perfluorocarboxylic acid (I) represented by general formula (I), ω-H perfluorocarboxylic acid (II) represented by general formula (II), perfluoroethercarboxylic acid (III) represented by general formula (III), perfluoroalkylalkylenecarboxylic acid (IV) represented by general formula (IV), perfluoroalkoxyfluorocarboxylic acid (V) represented by general formula (V), perfluoroalkylsulfonic acid (VI) represented by general formula (VI), ω-H perfluorosulfonic acid (VII) represented by general formula (VII), perfluoroalkylalkylenesulfonic acid (VIII) represented by general formula (VIII), fluorocarboxylic acid (X) represented by general formula (X): $Rf^7-O-Rf^8-O-CF_2-COOM$

wherein $Rf^7$ is a linear or branched, partially or fully fluorinated alkyl group having 1 to 6 carbon atoms and optionally containing an ether bond and/or a chlorine atom (provided that those having $-CH_2-$ are excluded), $Rf^8$ is a linear or branched, partially or fully fluorinated alkyl group having 1 to 6 carbon atoms (provided that those having $-CH_2-$are excluded), and M is as defined above, an alkoxyfluorosulfonic acid (XI) represented by general formula (XI): $Rf^9-O-CY^1FCF_2-SO_3M$

wherein $Rf^9$ is a linear or branched, partially or fully fluorinated alkyl group having 1 to 12 carbon atoms, optionally containing an ether bond, and optionally containing chlorine (provided that those having $-CH_2-$ are excluded), $Y^1$ is H or F, and M is as defined above, a compound (XII) represented by general formula (XII):

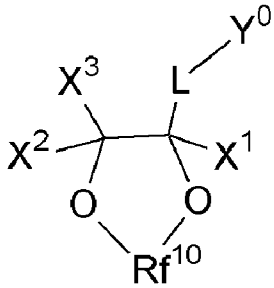

(X I I)

wherein $X^1$, $X^2$, and $X^3$ may be the same or different and are each independently H, F, and a linear or branched, partially or fully fluorinated alkyl group having 1 to 6 carbon atoms and optionally containing an ether bond (provided that those having $-CH_2-$ are excluded), provided that $X^2$ and $X^3$ are not simultaneously H, $Rf^{10}$ is a perfluoroalkylene group having 1 to 3 carbon atoms, L is a linking group, and $Y^0$ is an anionic group, and

a compound (XIII) represented by general formula (XIII): $Rf^{11}-O-(CF_2CF(CF_3)O)_{n9}(CF_2O)_{n10}CF_2COOM$

wherein $Rf^{11}$ is a fluoroalkyl group having 1 to 5 carbon atoms containing chlorine (provided that those having $-CH_2-$ are excluded), n9 is an integer of 0 to 3, n10 is an integer of 0 to 3, and M is as defined above. The use of such a fluorine-containing surfactant enables tetrafluoroethylene to be smoothly polymerized in the presence of an aqueous medium.

Examples of the fluorine-containing surfactant include compounds represented by the following formulae. The fluorine-containing surfactant may be a mixture of these compounds.

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$,

$CF_2ClCF(CF_3)OCF_2CF(CF_3)OCF_2COOM$,

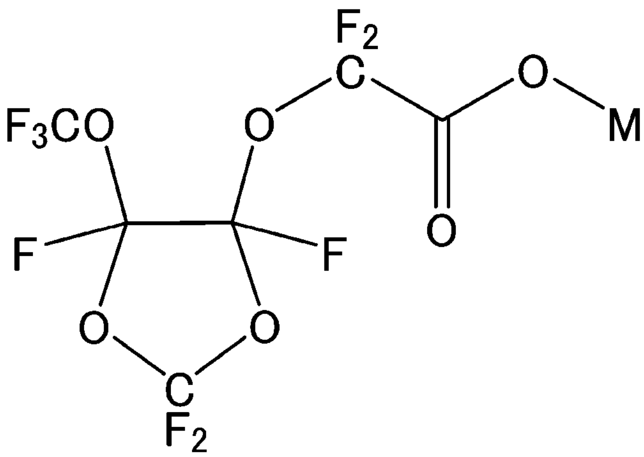

wherein M is H, a metal atom, $NR^7_4$, optionally substituted imidazolium, optionally substituted pyridinium, or optionally substituted phosphonium, and $R^7$ is H or an organic group.

The amount of the fluorine-containing surfactant added is preferably 10 ppm by mass to 10% by mass, is more preferably 100 ppm by mass or more and even more preferably 300 ppm by mass or more, and is more preferably 5% by mass or less and even more preferably 1% by mass or less, based on the aqueous medium.

(Polymerization initiator)

The polymerization initiator for use in the polymerization of tetrafluoroethylene is not limited as long as it is a polymerization initiator capable of generating radicals within the polymerization temperature range, and known oil-soluble and/or water-soluble polymerization initiators can be used. Moreover, the polymerization initiator can also be combined with a reducing agent or the like to form a redox agent and initiate polymerization. The concentration of the polymerization initiator is suitably determined according to the type of monomer, the molecular weight of the target low molecular weight

polytetrafluoroethylene, and the reaction rate.

The polymerization initiator may be an oil-soluble radical polymerization initiator or a water-soluble radical polymerization initiator.

The oil-soluble radical polymerization initiator may be a known oil-soluble peroxide, and representative examples include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω-hydro-dodecafluoroheptanoyl) peroxide, di(ω-hydro-tetradecafluorooctanoyl) peroxide, di(ω-hydro-hexadecafluorononanoyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorodotoriacontafluorodocosanoyl) peroxide.

The water-soluble radical polymerization initiator may be a known water-soluble peroxide, and examples include ammonium salts, potassium salts, and sodium salts of persulphuric acid, perboric acid, perchloric acid, perphosphoric acid, and percarbonic acid, organic peroxides of disuccinic acid peroxide and diglutaric acid peroxide, t-butyl permaleate, and t-butyl hydroperoxide. A reducing agent such as a sulfite may be contained together, and the amount thereof may be 0.1 to 20 times the amount of the peroxide.

For example, when performing the polymerization at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of persulfates include ammonium persulfate and potassium persulfate. Examples of sulfites include sodium sulfite and ammonium sulfite. In order to increase the decomposition rate of the initiator, the combination of the redox initiator preferably contains a copper salt or an iron salt. The copper salt may be copper(II) sulfate, and the iron salt may be iron(II) sulfate.

Examples of the redox initiator include potassium permanganate/oxalic acid, ammonium persulfate/bisulfite/iron sulfate, manganese triacetate/oxalic acid, cerium ammonium nitrate/oxalic acid, and bromate/bisulfite, and potassium permanganate/oxalic acid is preferable. When using a redox initiator, one of an oxidizing agent or a reducing agent may be introduced into a polymerization tank in advance, and then the other may be added continuously or intermittently to initiate polymerization. For example, when using potassium permanganate/oxalic acid, preferably, a polymerization tank is charged with oxalic acid, and potassium permanganate is continuously added thereto.

The amount of the polymerization initiator added is not limited, and the polymerization initiator is added in an amount that does not significantly decrease the polymerization rate (e.g., a concentration of several ppm in water) or more at once in the initial stage of polymerization, or added successively or continuously. The upper limit is within a range where the reaction temperature is allowed to increase while the polymerization reaction heat is removed through the device surface, and the upper limit is more preferably within a range where the polymerization reaction heat can be removed through the device surface.

By adding a decomposer when polymerizing tetrafluoroethylene, the concentration of radicals during polymerization can be regulated. Examples of the decomposer include sulfites, bisulfites, bromates, diimines, oxalic acid, copper salts, and iron salts. Examples of sulfites include sodium sulfite and ammonium sulfite. The copper salt may be copper(II) sulfate, and the iron salt may be iron(II) sulfate. The amount of the decomposer added is in the range of 25 to 300% by mass based on the amount of the oxidizing agent combined as a polymerization initiator (a redox initiator). The amount of the decomposer added is preferably 25 to 150% by mass, and more preferably 50 to 100% by mass. Further, the decomposer is preferably added after 5% by mass of all tetrafluoroethylene consumed in the polymerization reaction is polymerized, and more preferably after 10% by mass is polymerized. The amount of the decomposer added is preferably an amount corresponding to 0.1 to 20 ppm by mass and more preferably an amount corresponding to 3 to 10 ppm by mass of the mass of the aqueous medium used.

(Chain transfer agent)

In the production method of the present disclosure, a hydrocarbon chain transfer agent is used as the chain transfer agent for use in the polymerization of tetrafluoroethylene. Although the hydrocarbon chain transfer agent is not limited as long as it is a chain transfer agent containing only carbon atoms and hydrogen atoms, alkanes having 1 to 5 carbon atoms are preferable, and at least one selected from the group consisting of isopentane, methane, ethane, and propane is more preferable.

The amount of the chain transfer agent used is usually 1 to 50,000 ppm by mass, and preferably 1 to 20,000 ppm by mass, based on the total amount of tetrafluoroethylene fed. The amount of the chain transfer agent used is preferably an amount such that the chain transfer agent is completely consumed during the polymerization of tetrafluoroethylene and does not remain in the aqueous dispersion containing low molecular weight polytetrafluoroethylene so as not to deteriorate as much as possible the efficiency of removing the fluorine-containing compound having a hydrophilic group. Accordingly, the amount of the chain transfer agent used is more preferably 10,000 ppm by mass or less, even more preferably 5,000 ppm by mass or less, yet more preferably 1,000 ppm by mass or less, particularly preferably 500 ppm by mass or less, and most preferably 200 ppm by mass or less, based on the total amount of tetrafluoroethylene fed.

The chain transfer agent may be added to the reaction vessel at once before the beginning of the polymerization, may be added at once after the beginning of the polymerization, may be added in multiple portions during the polymerization, or may be added continuously during the polymerization.

(Aqueous medium)

The aqueous medium for use in the polymerization of tetrafluoroethylene is a reaction medium in which the polymerization is performed, and means a liquid containing water. The aqueous medium is not limited as long as it contains water, and may be an aqueous medium containing water and, for example, a fluorine-free organic solvent such as ether or ketone, and/or a fluorine-containing organic solvent having a boiling point of 40°C or lower.

The aqueous medium is preferably an aqueous medium solely containing water or an aqueous medium solely containing water and a fluorine-free organic solvent, and is more preferably an aqueous medium solely containing water because the polymerization of tetrafluoroethylene can proceed smoothly and, also, deterioration of the efficiency of removing the fluorine-containing compound having a hydrophilic group can be suppressed.

The moisture content in the aqueous medium is preferably 90% or more, more preferably 95% or more, even more preferably 99.0% or more, yet more preferably 99.5% or more, and particularly preferably 99.9% or more, and may be 100% based on the mass of the aqueous medium because the polymerization of tetrafluoroethylene can proceed smoothly and, also, deterioration of the efficiency of removing the fluorine-containing compound having a hydrophilic group can be suppressed.

(Other additives)

Additives such as buffers, pH adjusters, stabilizing aids, and dispersion stabilizers can be used in the polymerization of tetrafluoroethylene. In the polymerization of tetrafluoroethylene, radical scavengers and decomposers may be added to regulate the polymerization rate and the molecular weight. Also, fluorine-free anionic surfactants, fluorine-free nonionic surfactants, fluorine-free cationic surfactants, and the like may be used in the polymerization of tetrafluoroethylene.

The stabilizing aid is preferably paraffin wax, fluorine-containing oil, a fluorine-containing solvent, silicone oil, or the like. One stabilizing aid may be used singly, or two or more may be used in combination. The stabilizing aid is more preferably paraffin wax. The paraffin wax may be in the form of liquid, semi-solid, or solid at room temperature, and is preferably a saturated hydrocarbon having 12 or more carbon atoms. The paraffin wax usually preferably has a melting point of 40 to 65°C, and more preferably 50 to 65°C.

The amount of the stabilizing aid used is preferably 0.1 to 12% by mass, and more preferably 0.1 to 8% by mass, based on the mass of the aqueous medium used. Desirably, the stabilizing aid is sufficiently hydrophobic so that the stabilizing aid is completely separated from the aqueous dispersion after polymerization, and does not serve as a contaminating component.

(Modifying monomer)

A modifying monomer may be polymerized together with tetrafluoroethylene. The modifying monomer is not limited as long as it can be copolymerized with tetrafluoroethylene (TFE), and examples include fluoromonomers and non-fluoromonomers. Also, one modifying monomer may be used, or multiple modifying monomers may be used.

Examples of the non-fluoromonomer include, but are not limited to, monomers represented by the general formula:

$$CH_2=CR^{Q1}-LR^{Q2}$$

wherein $R^{Q1}$ represents a hydrogen atom or an alkyl group; L represents a single bond, -CO-O-*, -O-CO-*, or -O-; * indicates the position of bonding to $R^{Q2}$; $R^{Q2}$ represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. Among these, the non-fluoromonomer is preferably butyl methacrylate, vinyl acetate, or acrylic acid.

Examples of the fluoromonomer include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and perfluoroallyl ethers.

Examples of the perfluorovinyl ether include, but are not limited to, perfluoro unsaturated compounds represented by general formula (A):

$CF_2$=CF-ORf (A)

wherein Rf represents a perfluoro organic group. The "perfluoro organic group" as used herein means an organic group in which all hydrogen atoms bonded to the carbon atoms are replaced by fluorine atoms. The perfluoro organic group may have ether oxygen.

Examples of the perfluorovinyl ether include perfluoro(alkyl vinyl ether) (PAVE) in which Rf is a perfluoroalkyl group having 1 to 10 carbon atoms in the general formula (A). The perfluoroalkyl group preferably has 1 to 5 carbon atoms.

Examples of the perfluoroalkyl group in PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include those represented by general formula (A) in which Rf is a perfluoro(alkoxyalkyl) group having 4 to 9 carbon atoms; those in which Rf is a group represented by the following formula:

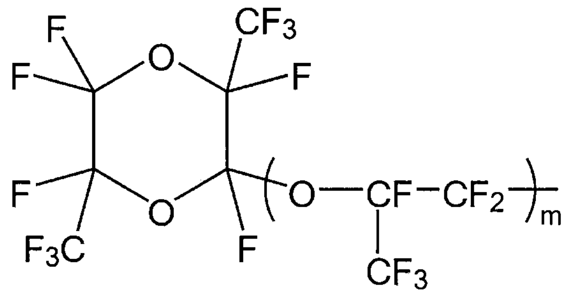

wherein m represents 0 or an integer of 1 to 4; and those in which Rf is a group represented by the following formula:

$CF_3CF_2CF_2$-(O-CF($CF_3$)-$CF_2$)$_n$-

wherein n represents an integer of 1 to 4.

Examples of hydrogen-containing fluoroolefins include $CH_2$=$CF_2$, CFH=$CH_2$, CFH=$CF_2$, $CH_2$=$CFCF_3$, $CH_2$=$CHCF_3$, CHF=$CHCF_3$ (E-form), and CHF=$CHCF_3$ (Z-form).

Examples of the (perfluoroalkyl)ethylene (PFAE) include, but are not limited to, (perfluorobutyl) ethylene (PFBE), and (perfluorohexyl) ethylene.

Examples of perfluoroallyl ether include fluoromonomers represented by the general formula:

$CF_2$=CF-$CF_2$-ORf

wherein Rf represents a perfluoro organic group.

Rf in the above general formula is the same as Rf in general formula (A). Rf is preferably a perfluoroalkyl group having 1 to 10 carbon atoms or a perfluoroalkoxyalkyl group having 1 to 10 carbon atoms. The perfluoroallyl ether is preferably at least one selected from the group consisting of $CF_2$=CF-$CF_2$-O-$CF_3$, $CF_2$=CF-$CF_2$-O-$C_2F_5$, $CF_2$=CF-$CF_2$-O-$C_3F_7$, and $CF_2$=CF-$CF_2$-O-$C_4F_9$, more preferably at least one selected from the group consisting of $CF_2$=CF-$CF_2$-O-$C_2F_5$, $CF_2$=CF-$CF_2$-O-$C_3F_7$, and $CF_2$=CF-$CF_2$-O-$C_4F_9$, and still more preferably $CF_2$=CF-$CF_2$-O-$CF_2CF_2CF_3$.

The modifying monomer is also preferably exemplified by a modifying monomer (3) having a monomer reactivity ratio of 0.1 to 8. The presence of the modifying monomer (3) makes it possible to obtain PTFE particles having a small particle size, and to thereby obtain an aqueous dispersion having high dispersion stability.

Here, the monomer reactivity ratio in the copolymerization with TFE is a value obtained by dividing a rate constant when the propagating radical reacts with TFE when the propagating radical is less than a repeating unit based on TFE by a rate constant when the propagating radical reacts with a modifying monomer. A smaller monomer reactivity ratio indicates higher reactivity of the modifying monomers with TFE. The monomer reactivity ratio can be determined by copolymerizing

TFE with the modifying monomers, determining the composition of the polymer formed immediately after initiation, and calculating the monomer reactivity ratio by Fineman-Ross equation.

The copolymerization is performed using 3,600 g of deionized degassed water, 1,000 ppm by mass of ammonium perfluorooctanoate based on the water, and 100 g of paraffin wax contained in an autoclave made of stainless steel with an internal volume of 6.0 L at a pressure of 0.78 MPaG and a temperature of 70°C. A modifying monomer in an amount of 0.05 g, 0.1 g, 0.2 g, 0.5 g, or 1.0 g is added to the reactor, and then 0.072 g of ammonium persulfate (20 ppm by mass based on the water) is added thereto. To maintain the polymerization pressure at 0.78 MPaG, TFE is continuously fed. When the amount of TFE charged reaches 1,000 g, stirring is stopped, and the pressure is released until the pressure in the reactor decreases to the atmospheric pressure. After cooling, the paraffin wax is separated to give an aqueous dispersion containing the produced polymer. The aqueous dispersion is stirred so that the produced polymer coagulates, and the polymer is dried at 150°C. The composition of the resulting polymer is calculated by suitably combining NMR, FT-IR, elemental analysis, and X-ray fluorescence analysis according to the type of monomer.

The modifying monomer (3) having a monomer reactivity ratio of 0.1 to 8 is preferably at least one selected from the group consisting of modifying monomers represented by formulae (3a) to (3d):

$CH_2=CH-Rf^1$ (3a)

wherein $Rf^1$ is a perfluoroalkyl group having 1 to 10 carbon atoms;

$CF_2=CF-O-Rf^2$ (3b)

wherein $Rf^2$ is a perfluoroalkyl group having 1 to 2 carbon atoms;

$CF_2=CF-O-(CF_2)_nCF=CF_2$ (3c)

wherein n is 1 or 2; and

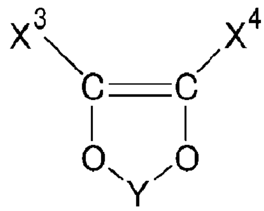

(3d)

wherein $X^3$ and $X^4$ are each F, Cl, or a methoxy group; and Y is represented by formula Y1 or Y2; and

-CF=CF- (Y1)

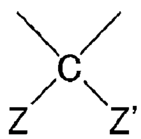

(Y2)

wherein Y2, Z, and Z' are each F or a fluorinated alkyl group having 1 to 3 carbon atoms.

The content of the modifying monomer (3) unit is preferably in the range of 0.00001 to 1.0% by mass based on the total polymerization units of the PTFE. The lower limit is more preferably 0.0001% by mass, more preferably 0.0005% by mass, even more preferably 0.001% by mass, and yet more preferably 0.005% by mass. The upper limit is, in ascending order of preference, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

The modifying monomer is preferably at least one selected from the group consisting of hexafluoropropylene, chlorotrifluoroethylene, vinylidene fluoride, perfluoro(alkyl vinyl ether), (perfluoroalkyl)ethylene, ethylene, and modifying monomers having a functional group capable of reacting by radical polymerization and a hydrophilic group, in view of obtaining an aqueous dispersion having a small average primary particle size of primary particles, a small aspect ratio of primary particles, and excellent stability. The use of the modifying monomer makes it possible to obtain an aqueous

dispersion of PTFE having a smaller average primary particle size, a small aspect ratio of primary particles, and excellent dispersion stability. Also, an aqueous dispersion having a smaller amount of uncoagulated polymer can be obtained.

From the viewpoint of reactivity with TFE, the modifying monomer preferably contains at least one selected from the group consisting of hexafluoropropylene, perfluoro(alkyl vinyl ether), and (perfluoroalkyl)ethylene.

More preferably, the modifying monomer contains at least one selected from the group consisting of hexafluoropropylene, perfluoro(methyl vinyl ether), perfluoro(propyl vinyl ether), (perfluorobutyl)ethylene, (perfluorohexyl) ethylene, and (perfluorooctyl)ethylene.

The total amount of hexafluoropropylene unit, perfluoro(alkyl vinyl ether) unit, and (perfluoroalkyl)ethylene unit is preferably in the range of 0.00001 to 1% by mass based on all polymerized units in PTFE. The lower limit of the total amount is more preferably 0.0001% by mass, more preferably 0.0005% by mass, even more preferably 0.001% by mass, and yet more preferably 0.005% by mass. The upper limit is, in ascending order of preference, 0.80% by mass, 0.70% by mass, 0.50% by mass, 0.40% by mass, 0.30% by mass, 0.20% by mass, 0.15% by mass, 0.10% by mass, 0.08% by mass, 0.05% by mass, or 0.01% by mass.

The modifying monomer also preferably includes a modifying monomer having a functional group capable of reacting by radical polymerization and a hydrophilic group (hereinafter, referred to as a "modifying monomer (A)").

The presence of the modifying monomer (A) makes it possible to obtain PTFE particles having a small primary particle size, and to thereby obtain an aqueous dispersion having high dispersion stability. Also, the amount of uncoagulated polymer can be reduced. Moreover, the aspect ratio of the primary particles can be reduced.

The amount of the modifying monomer (A) used is preferably an amount exceeding 0.1 ppm by mass of the aqueous medium, more preferably an amount exceeding 0.5 ppm by mass, even more preferably an amount exceeding 1.0 ppm by mass, yet more preferably 5 ppm by mass or more, and particularly preferably 10 ppm by mass or more. When the amount of the modifying monomer (A) used is excessively small, the average primary particle size of PTFE obtained may not be sufficiently small.

The amount of the modifying monomer (A) used may be within the above range, and the upper limit may be, for example, 5,000 ppm by mass. Also, in the production method, the modifying monomer (A) may be added to the system during the reaction in order to improve the stability of the aqueous dispersion during or after the reaction.

The modifying monomer (A) is highly water-soluble and, therefore, even when the unreacted modifying monomer (A) remains in the aqueous dispersion, it can be easily removed in the concentration step or the coagulation/washing step.

While the modifying monomer (A) is incorporated into the produced polymer during the course of polymerization, the concentration of the modifying monomer (A) in the polymerization system is low, and the amount incorporated into the polymer is small. Accordingly, problems that the heat resistance of PTFE is impaired or PTFE is colored after sintering do not arise.

Examples of the hydrophilic group in the modifying monomer (A) include $-NH_2$, $-PO_3M$, $-OPO_3M$, $-SO_3M$, $-OSO_3M$, and - COOM, wherein M represents H, a metal atom, $NR^{7y}_4$, optionally substituted imidazolium, optionally substituted pyridinium, or optionally substituted phosphonium, wherein $R^{7y}$ is H or an organic group and may be the same or different, and any two may be bonded to each other to form a ring. Among these, the hydrophilic group is preferably $-SO_3M$ or -COOM. The organic group in $R^{7y}$ is preferably an alkyl group. $R^{7y}$ is preferably H or a $C_{1-10}$ organic group, more preferably H or a $C_{1-4}$ organic group, and even more preferably H or a $C_{1-4}$ alkyl group.

The metal atom may be a monovalent or divalent metal atom, such as an alkali metal (Group 1) or an alkaline earth metal (Group 2), and is preferably Na, K, or Li.

Examples of the "functional group capable of reacting by radical polymerization" in the modifying monomer (A) include a group having an ethylenically unsaturated bond such as a vinyl group and an allyl group. The group having an ethylenically unsaturated bond can be represented by the following formula:

$$CX^eX^g=CX^fR-$$

wherein $X^e$, $X^f$, and $X^g$ are each independently F, Cl, H, $CF_3$, $CF_2H$, $CFH_2$, or $CH_3$; and R is a linking group. The linking group R may be the linking group $R^a$, which will be described below. Preferable examples include groups having an unsaturated bond, such as $-CH=CH_2$, $-CF=CH_2$, $-CH=CF_2$, $-CF=CF_2$, $-CH_2-CH=CH_2$, $-CF_2-CF=CH_2$, $-CF_2-CF=CF_2$, $-(C=O)-CH=CH_2$, $-(C=O)-CF=CH_2$, $-(C=O)-CH=CF_2$, $-(C=O)-CF=CF_2$, $-(C=O)-C(CH_3)=CH_2$, $-(C=O)-C(CF_3)=CH_2$, $-(C=O)-C(CH_3)=CF_2$, $-(C=O)-C(CF_3)=CF_2$, $-O-CH_2-CH=CH_2$, $-O-CF_2-CF=CH_2$, $-O-CH_2-CH=CF_2$, and $-O-CF_2-CF=CF_2$.

Since the modifying monomer (A) has a functional group capable of reaction by radical polymerization, it is conjectured that when used in the polymerization, the modifying monomer (A) reacts with a fluorine-containing monomer at the initial stage of the polymerization reaction and forms highly stable particles having a hydrophilic group derived from the modifying monomer (A). Accordingly, it is considered that the number of particles increases when the polymerization is performed in the presence of the modifying monomer (A).

The polymerization may be performed in the presence of one or more modifying monomers (A).

In the polymerization, the modifying monomer (A) may be a compound having an unsaturated bond.

The modifying monomer (A) is preferably a compound represented by general formula (4):

$$CX^iX^k=CX^jR^a-(CZ^1Z^2)_k-Y^3 \qquad (4)$$

wherein $X^i$, $X^j$, and $X^k$ are each independently F, Cl, H, or $CF_3$; $Y^3$ is a hydrophilic group; $R^a$ is a linking group; $Z^1$ and $Z^2$ are each independently H, F, or $CF_3$; and k is 0 or 1.

Examples of the hydrophilic group include $-NH_2$, $-PO_3M$, $-OPO_3M$, $-SO_3M$, $-OSO_3M$, and -COOM, wherein M represents H, a metal atom, $NR^{7y}_4$, optionally substituted imidazolium, optionally substituted pyridinium, or optionally substituted phosphonium, wherein $R^{7y}$ is H or an organic group, and may be the same or different, and any two may be bonded to each other to form a ring. Among these, the hydrophilic group is preferably $-SO_3M$ or -COOM. The organic group in $R^{7y}$ is preferably an alkyl group. $R^{7y}$ is preferably H or a $C_{1-10}$ organic group, more preferably H or a $C_{1-4}$ organic group, and even more preferably H or a $C_{1-4}$ alkyl group. The metal atom may be a monovalent or divalent metal atom, such as an alkali metal (Group 1) or an alkaline earth metal (Group 2), and is preferably Na, K, or Li.

The use of the modifying monomer (A) makes it possible to obtain an aqueous dispersion having a smaller average primary particle size and superior stability. Also, the aspect ratio of the primary particles can be reduced.

$R^a$ is a linking group. The "linking group" as used herein refers to a divalent linking group. The linking group may be a single bond and preferably contains at least one carbon atom, and the number of carbon atoms may be 2 or more, 4 or more, 8 or more, 10 or more, or 20 or more. The upper limit is not limited, and, for example, may be 100 or less, and may be 50 or less.

The linking group may be linear or branched, cyclic or acyclic, saturated or unsaturated, and substituted or unsubstituted, and, as desired, optionally contains one or more heteroatoms selected from the group consisting of sulfur, oxygen, and nitrogen, and, as desired, optionally contains one or more functional groups selected from the group consisting of ester, amide, sulfonamide, carbonyl, carbonate, urethane, urea, and carbamate. The linking group may be a group that does not contain a carbon atom and that is a catenary heteroatom such as oxygen, sulfur, or nitrogen.

$R^a$ is preferably a catenary heteroatom such as oxygen, sulfur, or nitrogen, or a divalent organic group.

When $R^a$ is a divalent organic group, a hydrogen atom bonded to a carbon atom may be replaced with halogen other than fluorine, such as chlorine, and $R^a$ may or may not contain a double bond. Also, $R^a$ may be linear or branched, and may be cyclic or acyclic. Also, $R^a$ may contain a functional group (e.g., ester, ether, ketone, amine, or halide).

$R^a$ may also be a fluorine-free divalent organic group or a partially fluorinated or perfluorinated divalent organic group.

$R^a$ may be, for example, a hydrocarbon group in which no fluorine atom is bonded to a carbon atom, a hydrocarbon group in which some hydrogen atoms bonded to carbon atoms are replaced by fluorine atoms, a hydrocarbon group in which all hydrogen atoms bonded to carbon atoms are replaced by fluorine atoms, -(C=O)-, -(C=O)-O-, or a hydrocarbon group containing an ether bond, and these may contain an oxygen atom, may contain a double bond, and may contain a functional group.

$R^a$ is preferably -(C=O)-, -(C=O)-O-, or a hydrocarbon group having 1 to 100 carbon atoms that optionally contains an ether bond and optionally contains a carbonyl group, wherein some or all of the hydrogen atoms bonded to the carbon atoms in the hydrocarbon group may be replaced by fluorine.

$R^a$ is preferably at least one selected from $-(CH_2)_a-$, $-(CF_2)_a-$, $-O-(CF_2)_a-$, $-(CF_2)_a-O-(CF_2)]_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-[(CF_2)_c-O]_d-$, $-O-[CF_2CF(CF_3)O]_a-(CF_2)_b-$, -(C=O)-, -(C=O)-O-, $-(C=O)-(CH_2)_a-$, $-(C=O)-(CF_2)_a-$, $-(C=O)-O-(CH_2)_a-$, $-(C=O)-O-(CF_2)_a-$, $-(C=O)-[(CH_2)_a-O]_b-$, $-(C=O)-[(CF_2)_a-O]_b-$, $-(C=O)-O[(CH_2)_a-O]_b-$, $-(C=O)-O[(CF_2)_a-O]_b-$, $-(C=O)-O[(CH_2)_a-O]_b-(CH_2)_c-$, $-(C=O)-O[(CF_2)_a-O]_b-(CF_2)_c-$, $-(C=O)-(CH_2)_a-O-(CH_2)_b-$, $-(C=O)-(CF_2)_a-O-(CF_2)_b-$, $-(C=O)-O-(CH_2)_a-O-(CH_2)_b-$, $-(C=O)-O-(CF_2)_a-O-(CF_2)_b-$, $-(C=O)-O-C_6H_4-$, and combinations thereof.

In the formulae, a, b, c, and d are each independently at least 1 or more. a, b, c and d may independently be 2 or more, 3 or more, 4 or more, 10 or more, or 20 or more. The upper limits of a, b, c, and d are, for example, 100.

Specific examples suitable for $R^a$ include $-CF_2-O-$, $-CF_2-O-CF_2-$, $-CF_2-O-CH_2-$, $-CF_2-O-CH_2CF_2-$, $-CF_2-O-CF_2CF_2-$, $-CF_2-O-CF_2CH_2-$, $-CF_2-O-CF_2CF_2CH_2-$, $-CF_2-O-CF(CF_3)-$, $-CF_2-O-CF(CF_3)CF_2-$, $-CF_2-O-CF(CF_3)CF_2-O-$, $-CF_2-O-CF(CF_3)CH_2-$, -(C=O)-, -(C=O)-O-, $-(C=O)-(CH_2)-$, $-(C=O)-(CF_2)-$, $-(C=O)-O-(CH_2)-$, $-(C=O)-O-(CF_2)-$, $-(C=O)-[(CH_2)_2-O]_n-$, $-(C=O)-[(CF_2)_2-O]_n-$, $-(C=O)-O[(CH_2)_2-O]_n-$, $-(C=O)-O[(CF_2)_2-O]_n-$, $-(C=O)-O[(CH_2)_2-O]_n-(CH_2)-$, $-(C=O)-O[(CF_2)_2-O]_n-(CF_2)-$, $-(C=O)-(CH_2)_2-O-(CH_2)-$, $-(C=O)-(CF_2)_2-O-(CF_2)-$, $-(C=O)-O-(CH_2)_2-O-(CH_2)-$, $-(C=O)-O-(CF_2)_2-O-(CF_2)-$, and $-(C=O)-O-C_6H_4-$. In particular, specifically $R^a$ is preferably $-CF_2-O-$, $-CF_2-O-CF_2-$, $-CF_2-O-CF_2CF_2-$, $-CF_2-O-CF(CF_3)-$, $-CF_2-O-CF(CF_3)CF_2-$, $-CF_2-O-CF(CF_3)CF_2-O-$, -(C=O)-, -(C=O)-O-, $(C=O)-(CH_2)-$, $-(C=O)-O-(CH_2)-$, $-(C=O)-O[(CH_2)_2-O]_n-$, $-(C=O)-O[(CH_2)_2-O]_n-(CH_2)-$, $-(C=O)-(CH_2)_2-O-(CH_2)-$, or $-(C=O)-O-C_6H_4-$.

In the formulae, n is an integer of 1 to 10.

$-R^a-(CZ^1Z^2)_k-$ in general formula (4) is preferably $-CF_2-O-CF_2-$, $-CF_2-O-CF(CF_3)-$, $-CF_2-O-C(CF_3)_2-$, $-CF_2-O-CF_2-CF_2-$, $-CF_2-O-CF_2-CF(CF_3)-$, $-CF_2-O-CF_2-C(CF_3)_2-$, $-CF_2-O-CF_2CF_2-CF_2-$, $-CF_2-O-CF_2CF_2-CF(CF_3)-$, $-CF_2-O-$

$CF_2CF_2-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)CF_2-CF_2-$, $-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, $-CF_2-O-CF(CF_3)CF_2-O-C(CF_3)_2-$, $-(C=O)-$, $-(C=O)-O-$, $-(C=O)-(CH_2)-$, $-(C=O)-(CF_2)-$, $-(C=O)-O-(CH_2)-$, $-(C=O)-O-(CF_2)-$, $-(C=O)-[(CH_2)_2-O]_n-(CH_2)-$, $-(C=O)-[(CF_2)_2-O]_n-(CF_2)-$, $-(C=O)-[(CH_2)_2-O]_n-(CH_2)-(CH_2)-$, $-(C=O)-[(CF_2)_2-O]_n-(CF_2)-(CF_2)-$, $-(C=O)-O[(CH_2)_2-O]_n-(CF_2)-$, $-(C=O)-O[(CH_2)_2-O]_n-(CH_2)-(CH_2)-$, $-(C=O)-O[(CF_2)_2-O]_n-(CF_2)-$, $-(C=O)-O[(CF_2)_2-O]_n-(CF_2)-(CF_2)-$, $-(C=O)-(CH_2)_2-O-(CH_2)-(CH_2)-$, $-(C=O)-(CF_2)_2-O-(CF_2)-(CF_2)-$, $-(C=O)-O-(CH_2)_2-O-(CH_2)-(CH_2)-$, $-(C=O)-O-(CF_2)_2-O-(CF_2)-(CF_2)-$, $-(C=O)-O-(CH_2)_2-O-(CH_2)-C(CF_3)_2-$, $-(C=O)-O-(CF_2)_2-O-(CF_2)-C(CF_3)_2-$, or $-(C=O)-O-C_6H_4-C(CF_3)_2-$, and is more preferably $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, $-CF_2-O-CF(CF_3)CF_2-O-CF(CF_3)-$, $-(C=O)-$, $-(C=O)-O-(CH_2)-$, $-(C=O)-O-(CH_2)-(CH_2)-$, $-(C=O)-O[(CH_2)_2-O]_n-(CH_2)-(CH_2)-$, $-(C=O)-O-(CH_2)_2-O-(CH_2)-C(CF_3)_2-$, or $-(C=O)-O-C_6H_4-C(CF_3)_2-$.

In the formulae, n is an integer of 1 to 10.

Specific examples of the compound represented by general formula (4) include compounds represented by the following formulae:

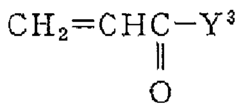 、 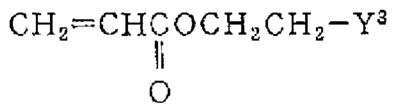 、 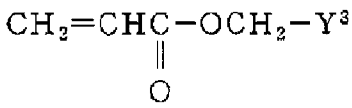 、

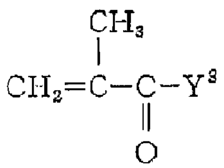 、 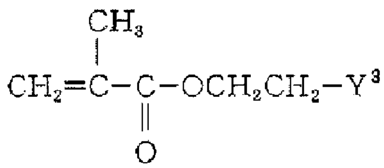 、 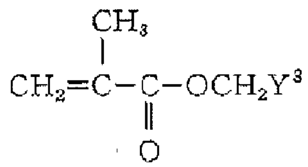 、

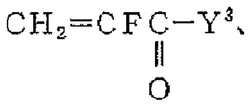 、 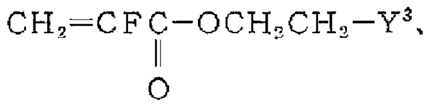 、 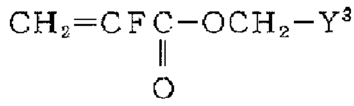 、

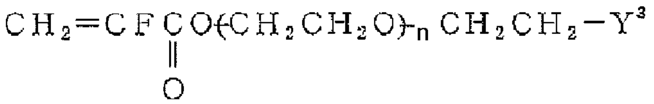 、

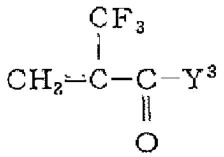 、 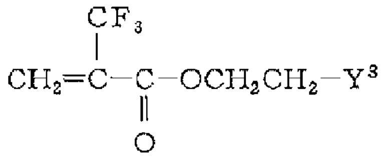 、

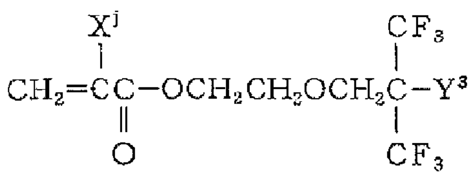 (i) 、

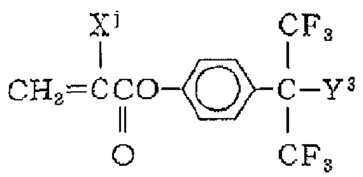 (i i)

wherein $X^j$ and $Y^3$ are as described above; and n is an integer of 1 to 10.

$R^a$ is preferably a divalent group represented by general formula (r1):

$$-(C{=}O)_h-(O)_i-CF_2-O-(CX^6{}_2)_e-\{O-CF(CF_3)\}_f-(O)_g- \qquad (r1)$$

(wherein $X^6$ is each independently H, F, or $CF_3$, e is an integer of 0 to 3, f is an integer of 0 to 3, g is 0 or 1, h is 0 or 1, and i is 0 or 1), and is also preferably a divalent group represented by general formula (r2):

$$-(C{=}O)_h-(O)_i-CF_2-O-(CX^7{}_2)_e-(O)_g- \qquad (r2)$$

(wherein $X^7$ is each independently H, F, or $CF_3$; e is an integer of 0 to 3; g is 0 or 1; h is 0 or 1; and i is 0 or 1).

$-R^a-(CZ^1Z^2)_k-$ in general formula (4) is also preferably a divalent group represented by the following formula (t1):

$$-(C{=}O)_h-(O)_i-CF_2-O-(CX^6{}_2)_e-\{O-CF(CF_3)\}_f-(O)_g-CZ^1Z^2- \qquad (t1)$$

(wherein $X^6$ is each independently H, F, or $CF_3$, e is an integer of 0 to 3, f is an integer of 0 to 3, g is 0 or 1, h is 0 or 1, i is 0 or 1, and $Z^1$ and $Z^2$ are each independently F or $CF_3$), and, more preferably, in formula (t1), one of $Z^1$ and $Z^2$ is F, and the other is $CF_3$.

Also, in general formula (4), $-R^a-(CZ^1Z^2)_k-$ is preferably a divalent group represented by the following formula (t2):

$$-(C{=}O)_h-(O)_i-CF_2-O-(CX^7{}_2)_e-(O)_g-CZ^1Z^2- \qquad (t2)$$

(wherein $X^7$ is each independently H, F, or $CF_3$, e is an integer of 0 to 3, g is 0 or 1, h is 0 or 1, i is 0 or 1, and $Z^1$ and $Z^2$ are each independently F or $CF_3$), and, more preferably, in formula (t2), one of $Z^1$ and $Z^2$ is F, and the other is $CF_3$.

The compound represented by general formula (4) also preferably has a C-F bond and does not have a C-H bond in the portion excluding the hydrophilic group ($Y^3$). That is, in general formula (A), preferably, $X^i$, $X^j$, and $X^k$ are all F, and $R^a$ is a perfluoroalkylene group having one or more carbon atoms. The perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The compound represented by general formula (4) may be partially fluorinated. That is, the compound represented by general formula (4) also preferably has at least one hydrogen atom bonded to a carbon atom and at least one fluorine atom bonded to a carbon atom, in the portion excluding the hydrophilic group ($Y^3$).

The compound represented by general formula (4) is also preferably a compound represented by the following formula (4a):

$$CF_2{=}CF-O-Rf^0-Y^3 \qquad (4a)$$

wherein $Y^3$ is a hydrophilic group; and $Rf^0$ is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

The compound represented by general formula (4) is also preferably a compound represented by the following formula (4b):

$$CH_2{=}CH-O-Rf^0-Y^3 \qquad (4b)$$

wherein $Y^3$ is a hydrophilic group; and $Rf^0$ is a perfluorinated divalent linking group as defined in formula (4a).

In a preferable embodiment, $Y^3$ in general formula (4) is $-OSO_3M$. Examples of the compound represented by general formula (4) when $Y^3$ is $-OSO_3M$ include $CF_2{=}CF(OCF_2CF_2CH_2OSO_3M)$, $CF_2{=}CF(O(CF_2)_4CH_2OSO_3M)$, $CF_2{=}CF(OCF_2CF(CF_3)CH_2OSO_3M)$, $CF_2{=}CF(OCF_2CF(CF_3)OCF_2CF_2CH_2OSO_3M)$, $CH_2{=}CH((CF_2)_4CH_2OSO_3M)$, $CF_2{=}CF(OCF_2CF_2SO_2N(CH_3)CH_2CH_2OSO_3M)$, $CH_2{=}CH(CF_2CF_2CH_2OSO_3M)$, and $CF_2{=}CF(OCF_2CF_2CF_2CF_2SO_2N(CH_3)CH_2CH_2OSO_3M)$. In the above formulae, M is as described above.

In a preferable embodiment, $Y^3$ in general formula (4) is $-SO_3M$. Examples of the compound represented by general formula (4) when $Y^3$ is $-SO_3M$ include $CF_2{=}CF(OCF_2CF_2SO_3M)$, $CF_2{=}CF(O(CF_2)_4SO_3M)$, $CF_2{=}CF(OCF_2CF(CF_3)SO_3M)$, $CF_2{=}CF(OCF_2CF(CF_3)OCF_2CF_2SO_3M)$, $CH_2{=}CH(CF_2CF_2SO_3M)$, $CF_2{=}CF(OCF_2CF(CF_3)OCF_2CF_2CF_2CF_2SO_3M)$, $CH_2{=}CH((CF_2)_4SO_3M)$, and $CH_2{=}CH((CF_2)_3SO_3M)$. In the above formulae, M is as described above.

In a preferable embodiment, $Y^3$ in the general formula (4) is -COOM. Examples of the compound represented by general formula (4) when $Y^3$ is -COOM include $CF_2{=}CF(OCF_2CF_2COOM)$, $CF_2{=}CF(OCF_2CF_2CF_2COOM)$, $CF_2{=}CF(O(CF_2)_5COOM)$, $CF_2{=}CF(OCF_2CF(CF_3)COOM)$, $CF_2{=}CF(OCF_2CF(CF_3)O(CF_2)_nCOOM)$ (n is greater than 1), $CH_2{=}CH(CF_2CF_2COOM)$, $CH_2{=}CH((CF_2)_4COOM)$, $CH_2{=}CH((CF_2)_3COOM)$,

$CF_2$=CF($OCF_2CF_2SO_2NR'CH_2COOM$), $CF_2$=CF(O($CF_2$)$_4SO_2NR'CH_2COOM$), $CF_2$=CF($OCF_2CF(CF_3)$ $SO_2NR'CH_2COOM$), $CF_2$=CF($OCF_2CF(CF_3)OCF_2CF_2SO_2NR'CH_2COOM$), $CH_2$=CH($CF_2CF_2SO_2NR'CH_2COOM$), $CF_2$=CF($OCF_2CF(CF_3)OCF_2CF_2CF_2CF_2SO_2NR'CH_2COOM$), $CH_2$=CH(($CF_2$)$_4SO_2NR'CH_2COOM$), and $CH_2$=CH(($CF_2$)$_3SO_2NR'CH_2COOM$). In the above formulae, R' is H or a $C_{1-4}$ alkyl group, and M is as described above.

In a preferable embodiment, $Y^3$ in general formula (4) is -$OPO_3M$ or -OP(O)$(OM)_2$. Examples of the compound represented by general formula (4) when $Y^3$ is -$OPO_3M$ or -OP(O)$(OM)_2$ include $CF_2$=CF($OCF_2CF_2CH_2OP(O)(OM)_2$), $CF_2$=CF(O($CF_2$)$_4CH_2OP(O)(OM)_2$), $CF_2$=CF($OCF_2CF(CF_3)CH_2OP(O)(OM)_2$), $CF_2$=CF($OCF_2CF(CF_3)$ $OCF_2CF_2CH_2OP(O)(OM)_2$), $CF_2$=CF($OCF_2CF_2SO_2N(CH_3)CH_2CH_2OP(O)(OM)_2$), $CF_2$=CF($OCF_2CF_2CF_2CF_2SO_2N(CH_3)CH_2CH_2OP(O)(OM)_2$), $CH_2$=CH($CF_2CF_2CH_2OP(O)(OM)_2$, $CH_2$=CH(($CF_2$)$_4CH_2OP(O)(OM)_2$), and $CH_2$=CH(($CF_2$)$_3CH_2OP(O)(OM)_2$). In the above formulae, M is as described above.

In a preferable embodiment, $Y^3$ in the general formula (4) is -$PO_3M$ or -P(O)$(OM)_2$. Examples of the compound represented by general formula (4) when $Y^3$ is -$PO_3M$ or - P(O)$(OM)_2$ include $CF_2$=CF($OCF_2CF_2P(O)(OM)_2$), $CF_2$=CF(O($CF_2$)$_4P(O)(OM)_2$), $CF_2$=CF($OCF_2CF(CF_3)P(O)(OM)_2$), $CF_2$=CF($OCF_2CF(CF_3)OCF_2CF_2P(O)(OM)_2$), $CH_2$=CH($CF_2CF_2P(O)(OM)_2$), $CH_2$=CH(($CF_2$)$_4P(O)(OM)_2$), and $CH_2$=CH(($CF_2$)$_3P(O)(OM)_2$), wherein M is as described above.

The compound represented by general formula (4) is preferably at least one selected from the group consisting of: a compound represented by general formula (5):

$$CX_2=CY(-CZ_2-O-Rf-Y^3) \qquad (5)$$

wherein X is the same or different and is -H or -F; Y is -H, - F, an alkyl group, or a fluorine-containing alkyl group; Z is the same or different and is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above; a compound represented by general formula (6):

$$CX_2=CY(-O-Rf-Y^3) \qquad (6)$$

wherein X is the same or different and is -H or -F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above; and a compound represented by general formula (7):

$$CX_2=CY(-Rf-Y^3) \qquad (7)$$

wherein X is the same or different and is -H or -F; Y is -H,-F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and $Y^3$ is as described above.

Note that the fluorine-containing alkylene group having 2 to 100 carbon atoms and having an ether bond described above is an alkylene group that does not include a structure in which an oxygen atom is an end and that contains an ether bond between carbon atoms.

In general formula (5), each X is -H or -F. X may be both -F, or at least one may be -H. For example, one may be -F and the other may be -H, or both may be -H.

In general formula (5), Y is -H, -F, an alkyl group, or a fluorine-containing alkyl group.

The alkyl group is an alkyl group not containing a fluorine atom, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Y is preferably -H, -F, or -$CF_3$, and more preferably -F.

In general formula (5), Z is the same or different and is -H, -F, an alkyl group, or a fluoroalkyl group.

The alkyl group is an alkyl group not containing a fluorine atom, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Z is preferably -H, -F, or $-CF_3$, and more preferably -F.

In general formula (5), at least one of X, Y, and Z preferably contains a fluorine atom. For example, X, Y, and Z may be -H, -F, and -F, respectively.

In general formula (5), Rf is a fluorine-containing alkylene group having 1 to 40 carbon atoms or a fluorine-containing alkylene group having 2 to 100 carbon atoms and having an ether bond.

The fluorine-containing alkylene group preferably has two or more carbon atoms. Also, the fluorine-containing alkylene group preferably has 30 or fewer carbon atoms, more preferably 20 or fewer carbon atoms, and even more preferably 10 or fewer carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The fluorine-containing alkylene group having an ether bond preferably has three or more carbon atoms. The fluorine-containing alkylene group having an ether bond preferably has 60 or fewer carbon atoms, more preferably 30 or fewer carbon atoms, and even more preferably 12 or fewer carbon atoms.

The fluorine-containing alkylene group having an ether bond is also preferably a divalent group represented by the following formula:

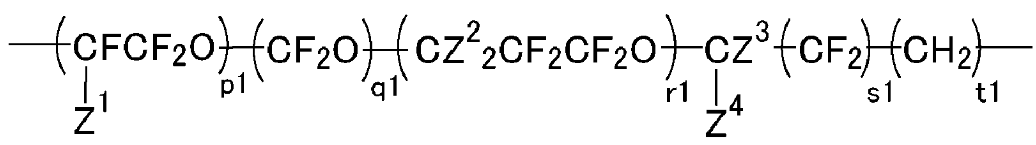

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF(CF_3)CF_2-O-CF(CF_3)-$, $-(CF(CF_3)CF_2-O)_n-CF(CF_3)-$ (where n is an integer of 1 to 10), $-CF(CF_3)CF_2-O-CF(CF_3)CH_2-$, $-(CF(CF_3)CF_2-O)_n-CF(CF_3)CH_2-$ (where n is an integer of 1 to 10), $-CH_2CF_2CF_2O-CH_2CF_2CH_2-$, $-CF_2CF_2CF_2O-CF_2CF_2-$, $-CF_2CF_2CF_2O-CF_2CF_2CH_2-$, $-CF_2CF_2O-CF_2-$, and $-CF_2CF_2O-CF_2CH_2-$. The fluorine-containing alkylene group having an ether bond is preferably a perfluoroalkylene group.

In general formula (5), $Y^3$ is preferably -COOM, $-SO_3M$, or $-OSO_3M$, wherein M is H, a metal atom, $NR^{7y}_4$, optionally substituted imidazolium, optionally substituted pyridinium, or optionally substituted phosphonium, wherein $R^{7y}$ is H or an organic group, and may be the same or different, and any two may be bonded to each other to form a ring.

The organic group in $R^{7y}$ is preferably an alkyl group.

$R^{7y}$ is preferably H or a $C_{1-10}$ organic group, more preferably H or a $C_{1-4}$ organic group, and even more preferably H or a $C_{1-4}$ alkyl group.

The metal atom may be an alkali metal (Group 1), an alkaline earth metal (Group 2), or the like, and is preferably Na, K, or Li.

M is preferably -H, a metal atom, or $-NR^7_4$, more preferably -H, an alkali metal (Group 1), an alkaline earth metal (Group 2), or $-NR^7_4$, even more preferably -H, -Na, -K, -Li, or $-NH_4$, yet more preferably -H, -Na, -K, or $-NH_4$, particularly preferably -H, -Na or $-NH_4$, and most preferably -H, or $-NH_4$.

$Y^3$ is preferably -COOM or $-SO_3M$, and more preferably -COOM.

The compound represented by general formula (5) is preferably a compound (5a) represented by general formula (5a):

$$CH_2=CF(-CF_2-O-Rf-Y^3) \qquad (5a)$$

wherein Rf and $Y^3$ are as described above.

Specific examples of the compound represented by general formula (5a) include compounds represented by the following formula:

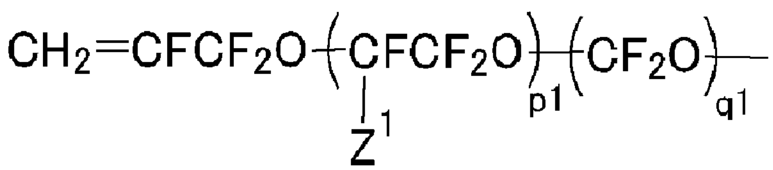

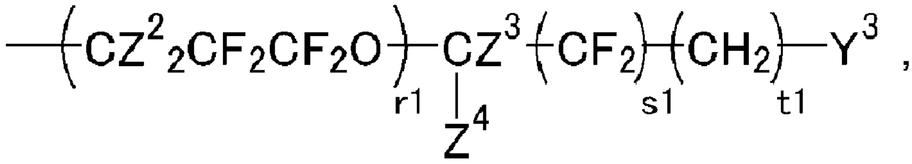

wherein $Z^1$ is F or $CF_3$; $Z^2$ and $Z^3$ are each H or F; $Z^4$ is H, F, or $CF_3$; p1+q1+r1 is an integer of 0 to 10; s1 is 0 or 1; t1 is an integer of 0 to 5; and $Y^3$ is as described above, provided that when $Z^3$ and $Z^4$ are both H, p1 + q1 + r1 + s1 is not 0. More specifically, preferable examples include

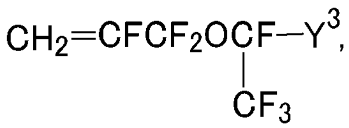 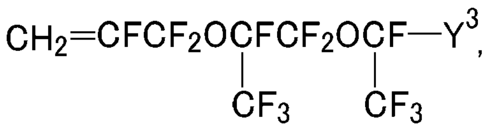

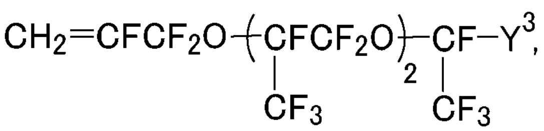 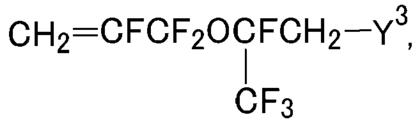

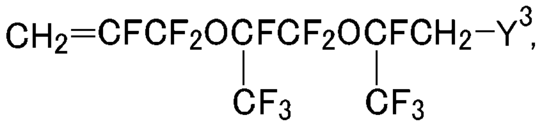 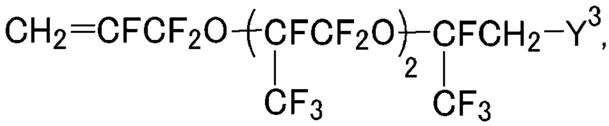

$CH_2=CFCF_2OCH_2CF_2-Y^3$, $CH_2=CFCF_2O(CH_2CF_2CF_2O)CH_2CF_2-Y^3$,
$CH_2=CFCF_2OCH_2CF_2CH_2-Y^3$,
$CH_2=CFCF_2O(CH_2CF_2CF_2O)CH_2CF_2CH_2-Y^3$,
$CH_2=CFCF_2OCF_2CF_2-Y^3$, $CH_2=CFCF_2O(CF_2CF_2CF_2O)CF_2CF_2-Y^3$,
$CH_2=CFCF_2OCF_2CF_2CH_2-Y^3$,
$CH_2=CFCF_2O(CF_2CF_2CF_2O)CF_2CF_2CH_2-Y^3$,
$CH_2=CFCF_2OCF_2-Y^3$, $CH_2=CFCF_2O(CF_2CF_2O)CF_2-Y^3$,
$CH_2=CFCF_2OCF_2CH_2-Y^3$,
$CH_2=CFCF_2O(CF_2CF_2O)CF_2CH_2-Y^3$,
and, in particular,

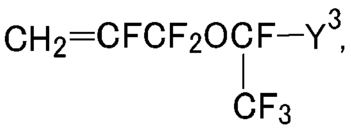 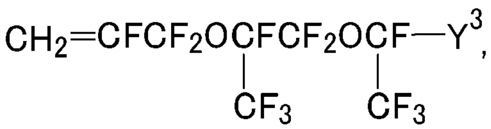

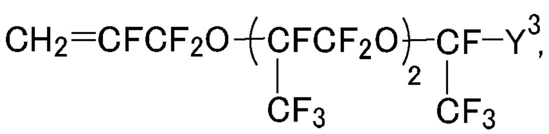 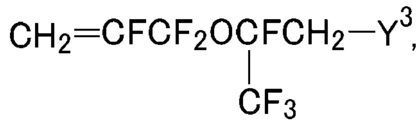

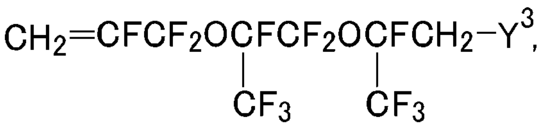 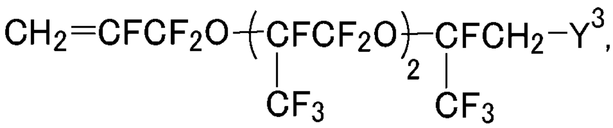

are preferable.

In the compound represented by general formula (5a), $Y^3$ in formula (5a) is preferably -COOM. In particular, the compound represented by general formula (5a) is preferably at least one selected from the group consisting of $CH_2=CFCF_2OCF(CF_3)COOM$ and $CH_2=CFCF_2OCF(CF_3)CF_2OCF(CF_3)COOM$ (wherein M is as defined above), and

more preferably $CH_2=CFCF_2OCF(CF_3)COOM$.

The compound represented by general formula (5) is preferably a compound (5b) represented by general formula (5b):

$$CX^2_2=CFCF_2\text{-}O\text{-}(CF(CF_3)CF_2O)_{n5}\text{-}CF(CF_3)\text{-}Y^3 \qquad (5b)$$

wherein each $X^2$ is the same and represents F or H; n5 represents 0 or an integer of 1 to 10; and $Y^3$ is as defined above.

In formula (5b), n5 is preferably 0 or an integer of 1 to 5, more preferably 0, 1, or 2, and even more preferably 0 or 1 from the viewpoint of stability of the resulting aqueous dispersion. $Y^3$ is preferably -COOM from the viewpoint of obtaining appropriate water solubility and stability of the aqueous dispersion, and M is preferably H or $NH_4$ from the viewpoint of being less likely to remain as impurities and improving the heat resistance of the resulting formed article.

Examples of the compound represented by formula (5b) include $CH_2=CFCF_2OCF(CF_3)COOM$ and $CH_2=CFCF_2OCF(CF_3)CF_2OCF(CF_3)COOM$, wherein M is as defined above.

Examples of the compound represented by general formula (5) further include a compound represented by general formula (5c) :

$$CF_2=CFCF_2\text{-}O\text{-}Rf\text{-}Y^3 \qquad (5c)$$

wherein Rf and $Y^3$ are as described above.

More specific examples include:

$CF_2=CFCF_2OCF_2CF_2CF_2\text{-}Y^3$,

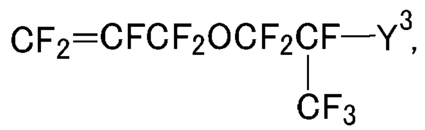

$CF_2=CFCF_2OCF_2CF_2CF_2CH_2\text{-}Y^3$,

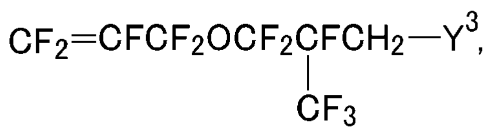

and the like.

In general formula (6), each X is -H or -F. X may be both -F, or at least one may be -H. For example, one may be -F and the other may be -H, or both may be -H.

In general formula (6), Y is -H, -F, an alkyl group, or a fluorine-containing alkyl group.

The alkyl group is an alkyl group not containing a fluorine atom, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Y is preferably -H, -F, or $-CF_3$, and more preferably -F.

In general formula (6), at least one of X and Y preferably contains a fluorine atom. For example, X, Y, and Z may be -H, -F, and -F, respectively.

In general formula (6), Rf is a fluorine-containing alkylene group having 1 to 40 carbon atoms or a fluorine-containing alkylene group having 2 to 100 carbon atoms and having an ether bond.

The fluorine-containing alkylene group preferably has two or more carbon atoms. Also, the fluorine-containing alkylene group preferably has 30 or fewer carbon atoms, more preferably 20 or fewer carbon atoms, and even more preferably 10 or fewer carbon atoms. Examples of the fluorine-containing alkylene group include $-CF_2-$, $-CH_2CF_2-$,

$-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

In general formula (6), $Y^3$ is preferably -COOM, $-SO_3M$, or $-OSO_3M$, wherein M is H, a metal atom, $NR^{7y}{}_4$, optionally substituted imidazolium, optionally substituted pyridinium, or optionally substituted phosphonium, wherein $R^{7y}$ is H or an organic group, and may be the same or different, and any two may be bonded to each other to form a ring.

The organic group of $R^{7y}$ is preferably an alkyl group. $R^{7y}$ is preferably H or a $C_{1-10}$ organic group, more preferably H or a $C_{1-4}$ organic group, and even more preferably H or a $C_{1-4}$ alkyl group.

The metal atom may be an alkali metal (Group 1), an alkaline earth metal (Group 2), or the like, and is preferably Na, K, or Li.

M is preferably -H, a metal atom, or $-NR^7{}_4$, more preferably -H, an alkali metal (Group 1), an alkaline earth metal (Group 2), or $-NR^7{}_4$, even more preferably -H, -Na, -K, - Li, or $-NH_4$, yet more preferably -H, -Na, -K, or $-NH_4$, particularly preferably -H, -Na or $-NH_4$, and most preferably - H, or $-NH_4$.

$Y^3$ is preferably -COOM or $-SO_3M$, and more preferably - COOM.

The compound represented by general formula (6) is preferably at least one selected from the group consisting of compounds represented by general formulae (6a), (6b), (6c), (6d), and (6e):

$$CF_2=CF-O-(CF_2)_{n1}-Y^3 \qquad (6a)$$

wherein n1 represents an integer of 1 to 10, and $Y^3$ is as defined above;

$$CF_2=CF-O-(CF_2C(CF_3)F)_{n2}-Y^3 \qquad (6b)$$

wherein n2 represents an integer of 1 to 5, and $Y^3$ is as defined above;

$$CF_2=CF-O-(CFX^1)_{n3}-Y^3 \qquad (6c)$$

wherein $X^1$ represents F or $CF_3$; n3 represents an integer of 1 to 10; and $Y^3$ is as defined above;

$$CF_2=CF-O-(CF_2CFX^1O)_{n4}-(CF_2)_{n6}-Y^3 \qquad (6d)$$

wherein n4 represents an integer of 1 to 10, n6 represents an integer of 1 to 3, and $Y^3$ and $X^1$ are as defined above; and

$$CF_2=CF-O-(CF_2CF_2CFX^1O)_{n5}-CF_2CF_2CF_2-Y^3 \qquad (6e)$$

wherein n5 represents an integer of 0 to 10, and $Y^3$ and $X^1$ are as defined above.

In formula (6a), n1 is preferably an integer of 5 or less, and more preferably an integer of 2 or less. $Y^3$ is preferably -COOM or $-SO_3M$ from the viewpoint of obtaining appropriate water solubility and stability of the aqueous dispersion, and M is preferably H or $NH_4$ from the viewpoint of being less likely to remain as impurities and improving the heat resistance of the resulting formed article.

Examples of the compound represented by formula (6a) include $CF_2=CF-O-CF_2COOM$, $CF_2=CF(OCF_2CF_2COOM)$, $CF_2=CF(OCF_2CF_2CF_2COOM)$, $CF_2=CF-O-CF_2SO_3M$, $CF_2=CF(OCF_2CF_2SO_3M)$, and $CF_2=CF(OCF_2CF_2CF_2SO_3M)$, wherein M is as defined above.

In formula (6b), n2 is preferably an integer of 3 or less from the viewpoint of stability of the resulting aqueous dispersion, $Y^3$ is preferably -COOM or $-SO_3M$ from the viewpoint of obtaining appropriate water solubility and stability of the aqueous dispersion, and M is preferably H or $NH_4$ from the viewpoint of being less likely to remain as impurities and improving the heat resistance of the resulting formed article.

In formula (6c), n3 is preferably an integer of 5 or less from the viewpoint of water solubility, $Y^3$ is preferably - COOM or $-SO_3M$ from the viewpoint of obtaining appropriate water solubility and stability of the aqueous dispersion, and M is preferably H or $NH_4$ from the viewpoint of improving dispersion stability.

In formula (6d), $X^1$ is preferably $-CF_3$ from the viewpoint of stability of the aqueous dispersion, n4 is preferably an integer of 5 or less from the viewpoint of water solubility, $Y^3$ is preferably -COOM or $-SO_3M$ from the viewpoint of obtaining appropriate water solubility and stability of the aqueous dispersion, and M is preferably H or $NH_4$.

Examples of the compound represented by formula (6d) include $CF_2=CFOCF_2CF(CF_3)OCF_2CF_2COOM$, $CF_2=CFOCF_2CF(CF_3)OCF_2COOM$, $CF_2=CFOCF_2CF(CF_3)OCF_2CF_2CF_2COOM$, $CF_2=CFOCF_2CF(CF_3)OCF_2CF_2SO_3M$, $CF_2=CFOCF_2CF(CF_3)OCF_2SO_3M$, and $CF_2=CFOCF_2CF(CF_3)OCF_2CF_2CF_2SO_3M$, wherein M represents H, $NH_4$, or an alkali metal.

In general formula (6e), n5 is preferably an integer of 5 or less from the viewpoint of water solubility, $Y^3$ is

preferably -COOM or $-SO_3M$ from the viewpoint of obtaining appropriate water solubility and stability of the aqueous dispersion, and M is preferably H or $NH_4$.

Examples of the compound represented by general formula (6e) include $CF_2=CFOCF_2CF_2CF_2COOM$ and $CF_2=CFOCF_2CF_2CF_2SO_3M$, wherein M represents H, $NH_4$, or an alkali metal.

In general formula (7), Rf is preferably a fluorine-containing alkylene group having 1 to 40 carbon atoms. In general formula (7), at least one of X and Y preferably contains a fluorine atom.

The compound represented by general formula (7) is preferably at least one selected from the group consisting of a compound represented by general formula (7a):

$$CF_2=CF-(CF_2)_{n1}-Y^3 \qquad (7a)$$

wherein n1 represents an integer of 1 to 10; and $Y^3$ is as defined above; and a compound represented by general formula (7b):

$$CF_2=CF-(CF_2C(CF_3)F)_{n2}-Y^3 \qquad (7b)$$

wherein n2 represents an integer of 1 to 5; and $Y^3$ is as defined above.

$Y^3$ is preferably $-SO_3M$ or -COOM, and M is preferably H, a metal atom, $NR^{7y}_4$, optionally substituted imidazolium, optionally substituted pyridinium, or optionally substituted phosphonium. $R^{7y}$ represents H or an organic group.

In formula (7a), n1 is preferably an integer of 5 or less, and more preferably an integer of 2 or less. $Y^3$ is preferably -COOM or $-SO_3M$ from the viewpoint of obtaining appropriate water solubility and stability of the aqueous dispersion, and M is preferably H or $NH_4$ from the viewpoint of being less likely to remain as impurities and improving the heat resistance of the resulting formed article. Examples of the compound represented by formula (7a) include $CF_2=CFCF_2COOM$ and $CF_2=CFCF_2SO_3M$, wherein M is as defined above.

In formula (7b), n2 is preferably an integer of 3 or less from the viewpoint of stability of the resulting aqueous dispersion, $Y^3$ is preferably -COOM or $-SO_3M$ from the viewpoint of obtaining appropriate water solubility and stability of the aqueous dispersion, and M is preferably H or $NH_4$ from the viewpoint of being less likely to remain as impurities and improving the heat resistance of the resulting formed article.

The modifying monomer preferably includes the modifying monomer (A), preferably includes at least one selected from the group consisting of compounds represented by general formula (5a), general formula (5c), general formula (6a), general formula (6b), general formula (6c), and general formula (6d), and more preferably includes the compound represented by general formula (5a) or general formula (5c).

When the modifying monomer used is the modifying monomer (A), the content of the modifying monomer (A) unit is preferably in the range of 0.00001 to 1.0% by mass based on all polymerized units in polytetrafluoroethylene. The lower limit is more preferably 0.0001% by mass, more preferably 0.0005% by mass, even more preferably 0.001% by mass, and yet more preferably 0.005% by mass. The upper limit is, in ascending order of preference, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

(Polymerization conditions)

Tetrafluoroethylene can be polymerized at normal pressure and temperature. Usually, the polymerization temperature is 5 to 120°C, and the polymerization pressure is 0.05 to 10 MPaG. The polymerization temperature and the polymerization pressure are suitably determined according to the type of monomer, the molecular weight of the target low molecular weight polytetrafluoroethylene, the reaction rate, and the like.

The polymerization of tetrafluoroethylene can be terminated by, after preparing the aqueous dispersion, terminating the stirring of the contents of the reactor if desired, and evacuating the reactor until the internal pressure reaches normal pressure.

To terminate the polymerization reaction of tetrafluoroethylene, a polymerization terminator (a radical scavenger) may be added.

The polymerization terminator may be a compound having no reinitiation ability after addition or chain transfer to a free radical in the polymerization system. Specifically, used is a compound that readily undergoes a chain transfer reaction with a primary radical or a propagating radical and then generates a stable radical that does not react with a monomer or a compound that readily undergoes an addition reaction with a primary radical or a propagating radical to generate a stable radical. The activity of what is commonly referred to as a chain transfer agent is characterized by the chain transfer constant and the reinitiation efficiency, and, among chain transfer agents, those having almost 0%

reinitiation efficiency are referred to as polymerization terminators. The polymerization terminator is preferably at least one selected from the group consisting of aromatic hydroxy compounds, aromatic amines, N,N-diethylhydroxylamine, quinone compounds, terpenes, thiocyanates, and cupric chloride ($CuCl_2$). Examples of aromatic hydroxy compounds include unsubstituted phenols, polyhydric phenols, salicylic acid, m- or p-salicylic acid, gallic acid, and naphthol. Examples of unsubstituted phenols include o-, m-, or p-nitrophenol, o-, m-, or p-aminophenol, and p-nitrosophenol. Examples of polyhydric phenols include catechol, resorcin, hydroquinone, pyrogallol, phloroglucin, and naphthresorcinol. Examples of aromatic amines include o-, m-, or p-phenylenediamine and benzidine. Examples of quinone compounds include hydroquinone, o-, m- or p-benzoquinone, 1,4-naphthoquinone, and alizarin. Examples of thiocyanates include ammonium thiocyanate ($NH_4SCN$), potassium thiocyanate (KSCN), and sodium thiocyanate (NaSCN). In particular, the polymerization terminator is preferably a quinone compound, and more preferably hydroquinone.

(Aqueous dispersion obtained by polymerization)

Polymerization of tetrafluoroethylene yields an aqueous dispersion containing primary particles of low molecular weight polytetrafluoroethylene. The content of low molecular weight polytetrafluoroethylene in the aqueous dispersion as polymerized is usually 8 to 50% by mass based on the aqueous dispersion.

The aqueous dispersion obtained by polymerizing tetrafluoroethylene may contain, other than low molecular weight polytetrafluoroethylene, a fluorine-containing compound having a hydrophilic group produced by polymerizing the monomer. In particular, when polymerizing tetrafluoroethylene using a hydrocarbon chain transfer agent as the chain transfer agent, there is a tendency that a fluorine-containing compound having a hydrophilic group is likely to be produced.

A typical fluorine-containing compound having a hydrophilic group in the aqueous dispersion obtained by polymerization is a fluorine-containing compound having a hydrophilic group and having a molecular weight of 1,000 g/mol or less. The production method of the present disclosure makes it possible to eventually produce an aqueous dispersion having a reduced content of the fluorine-containing compound having a hydrophilic group and having a molecular weight of 1,000 g/mol or less.

In one embodiment, the aqueous dispersion obtained by the polymerization contains a fluorine-containing surfactant added during the polymerization as the fluorine-containing compound having a hydrophilic group. The fluorine-containing surfactant added during the polymerization is as described above for the fluorine-containing surfactant used in the polymerization of tetrafluoroethylene.

The content of the fluorine-containing compound having a hydrophilic group in the aqueous dispersion obtained by the polymerization may be 200 ppb by mass or more, 300 ppb by mass or more, or 400 ppb by mass or more, and may be 10% by mass or less, 1% by mass or less, or 0.5% by mass or less, based on the aqueous dispersion.

The content of the fluorine-containing surfactant, used when polymerizing tetrafluoroethylene, in the aqueous dispersion obtained by the polymerization may be 200 ppb by mass or more, 300 ppb by mass or more, or 400 ppb by mass or more, and may be 10% by mass or less, 1% by mass or less, or 0.5% by mass or less, based on the aqueous dispersion.

In one embodiment, the aqueous dispersion obtained by the polymerization contains a compound (I) represented by the following general formula (I) as the fluorine-containing compound having a hydrophilic group:
General formula (I):

$$F(CF_2)_{n1}COOM \qquad (I)$$

wherein n1 is an integer of 3 to 13; and M is H, a metal atom, $NR^7_4$, optionally substituted imidazolium, optionally substituted pyridinium, or optionally substituted phosphonium, wherein $R^7$ is H or an organic group.

When the aqueous dispersion obtained by the polymerization contains at least the compound (I) represented by general formula (I) as the fluorine-containing compound having a hydrophilic group, the content of the compound (I) in the aqueous dispersion obtained by the polymerization may be 200 ppb by mass or more, 300 ppb by mass or more, or 400 ppb by mass or more, and may be 10% by mass or less, 1% by mass or less, or 0.5% by mass or less, based on the aqueous dispersion.

In one embodiment, the aqueous dispersion obtained by the polymerization contains a compound represented by the following general formula (H1) as the fluorine-containing compound having a hydrophilic group:

General formula (H1): $[X\text{-}Rf\text{-}A^-]_iM^{i+}$

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; $A^-$ is an acid group; $M^{i+}$ is a cation having a valence of i; and i represents an integer of 1 to 3.

In one embodiment, the aqueous dispersion obtained by the polymerization contains a compound represented by the following general formula (H2) as the fluorine-containing compound having a hydrophilic group:

General formula (H2): $[C_{n-1}F_{2n-1}COO^-]M^+$

wherein n is an integer of 9 to 14, and $M^+$ represents a cation.

The compound represented by general formula (H2) (perfluoroalkanoic acid) is known to be formed during polymerization when perfluoro(alkyl vinyl ether) or the like is used as a monomer (see International Publication No. WO 2019/161153).

In one embodiment, the aqueous dispersion obtained by the polymerization contains a compound represented by the following general formula (H3) as the fluorine-containing compound having a hydrophilic group:

General formula (H3): $[R^1\text{-O-L-}CO_2^-]M^+$

wherein $R^1$ is a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated, or fully fluorinated alkylene group; and $M^+$ represents a cation.

In one embodiment, the aqueous dispersion obtained by the polymerization contains a compound represented by general formula (H4) as the fluorine-containing compound having a hydrophilic group:

General formula (H4): $H\text{-}Rf^{n0}\text{-}Y^0$

wherein $Rf^{n0}$ is a linear, branched, or cyclic alkylene group having 3 to 20 carbon atoms in which some or all of H are replaced by F, the alkylene group optionally containing one or more ether bonds in which some of H are optionally replaced by Cl; and $Y^0$ is an anionic group.

Examples of the compound represented by general formula (H4) include compounds represented by any of the following general formulae:

General formula (H4-1) : $[H\text{-}(CF_2)_{m1}CO_2^-]M^+$

wherein m1 is an integer of 3 to 20, and $M^+$ represents a cation; and

General formula (H4-2): $[H\text{-}(CF_2)_{m2}(CF(CF_3))_{m3}\text{-}CO_2^-]M^+$ wherein m2 is an integer of 1 to 17, m3 is an integer of 1 to 9, and $M^+$ represents a cation, provided that m2 and m3 are selected so as to satisfy $3 \leq (m2 + 2 \times m3) \leq 19$, and the repeating units occur in any order in the formula.

(Pretreatment)

In the production method of the present disclosure, after preparing an aqueous dispersion containing low molecular weight polytetrafluoroethylene by polymerizing tetrafluoroethylene, the aqueous dispersion is subjected to a pretreatment before a radical generator is added to the aqueous dispersion.

As the pretreatment method, any of the following methods (1) to (4) is preferable. These methods can be performed individually or in combination:

(1) a method in which the aqueous dispersion is brought into contact with a gas containing oxygen;
(2) a method in which the aqueous dispersion is brought into contact with an oxidizing agent;
(3) a method in which the aqueous dispersion is brought into contact with an alcohol; and
(4) a method in which a pH of the aqueous dispersion is adjusted to 4.0 or higher.

Examples of the method (1) may include the following:

a method in which, after polymerizing tetrafluoroethylene, a gas containing oxygen is fed into the reactor to bring the aqueous dispersion into contact with the gas containing oxygen;
a method in which, after polymerizing tetrafluoroethylene, the aqueous dispersion in the reactor is recovered and accommodated in a container different from the reactor to bring the aqueous dispersion into contact with a gas containing oxygen (air);
a method in which a gas containing oxygen is bubbled into the aqueous dispersion to generate bubbles and bring the aqueous dispersion into contact with the gas containing oxygen (bubbling method); and
a method in which the aqueous dispersion is stirred in air.

Among these, as the method (1), a method in which a gas containing oxygen is bubbled into the aqueous

dispersion to generate bubbles and bring the aqueous dispersion into contact with the gas containing oxygen (bubbling method) or a method in which the aqueous dispersion is stirred in air is preferable. When bubbling the gas containing oxygen into the aqueous dispersion, the flow rate of the gas is, for example, 1 to 30 L/min. The aqueous dispersion may also be stirred (aeration stirring) while bubbling the gas containing oxygen into the aqueous dispersion.

Examples of the gas containing oxygen include oxygen gas and air. The oxygen content in the gas containing oxygen may be 20 to 100% by volume.

The temperature at which the aqueous dispersion and the gas containing oxygen are brought into contact is preferably 5 to 99°C, more preferably 15°C or higher, and more preferably lower than 35°C.

The pressure at which the aqueous dispersion and the gas containing oxygen are brought into contact may be normal pressure.

The time for which the aqueous dispersion and the gas containing oxygen are brought into contact is preferably 1 minute or longer, more preferably 5 minutes or longer, even more preferably 10 minutes or longer, and particularly preferably 30 minutes or longer, and is preferably 48 hours or shorter, more preferably 24 hours or shorter, and even more preferably 12 hours or shorter. The time for which the aqueous dispersion and the gas containing oxygen are brought into contact may be the time for which the bubbling method is performed. Alternatively, the time for which the aqueous dispersion and the gas containing oxygen are brought into contact may be the stirring time when stirring in air.

In one embodiment of the production method of the present disclosure, it is preferable to carry out a pretreatment of the aqueous dispersion using the method (1), thereby obtaining an aqueous dispersion having an oxygen saturation degree of 50.0% or higher. By sufficiently increasing the amount of oxygen dissolved in the aqueous dispersion prior to the addition of a radical generator to the aqueous dispersion, the content of the fluorine-containing compound in the aqueous dispersion can be reduced more efficiently. The oxygen saturation degree of the aqueous dispersion is preferably 60.0% or higher, more preferably 70.0% or higher, and even more preferably 80.0% or higher. The oxygen saturation degree of the aqueous dispersion may be 99% or lower.

In addition, it is also an embodiment of the production method of the present disclosure to carry out a pretreatment of the aqueous dispersion using the method (1), thereby increasing the oxygen saturation degree of the aqueous dispersion to 50.0 to 70.0%, and then increase the oxygen saturation degree of the aqueous dispersion to 80.0% or higher using any of the methods (1) to (4).

In the present disclosure, the oxygen saturation degree refers to the proportion of the actual amount of dissolved oxygen to the amount of saturated dissolved oxygen in water at 1 atm. The oxygen saturation degree can be measured by an optical dissolved oxygen meter.

In one embodiment of the production method of the present disclosure, it is preferable to carry out a pretreatment of the aqueous dispersion using the method (1), thereby obtaining an aqueous dispersion in which the content of a polymerization radical represented by general formula (1) is 0 $g^{-1}$ or less and the content of an oxidation radical represented by general formula (2) is 0.1 $g^{-1}$ or more. The content of the oxidation radical may be 9.0 $g^{-1}$ or less. The aqueous dispersion obtained by polymerizing tetrafluoroethylene, or tetrafluoroethylene and a modifying monomer, contains the polymerization radical represented by general formula (1). By converting the polymerization radical in the aqueous dispersion into the oxidation radical before adding a radical generator to the aqueous dispersion, the content of the fluorine-containing compound in the aqueous dispersion can be reduced more efficiently. Although the content of the polymerization radical is theoretically not less than 0 $g^{-1}$, a measured value below 0 $g^{-1}$ may be obtained in some cases.

General formula (1): $R\text{-}(CF_2\text{-}CF_2)_n\cdot$ (wherein R is a monovalent group, n is an integer of 1 or more, and · represents an unpaired electron)

General formula (2): $R\text{-}(CF_2\text{-}CF_2)_nO\text{-}O\cdot$ (wherein R is a monovalent group, n is an integer of 1 or more, and · represents an unpaired electron)

In general formulae (1) and (2), R is a monovalent group. As R, COOH, OH, $SO_3H$, $CF_3$, $CH_3$, or $R^{11}\text{-}R^{12}\text{-}$ (wherein $R^{11}$ represents COOH, OH, $SO_3H$, $CF_3$, or $CH_3$, and $R^{12}$ represents a chain formed by polymerization of tetrafluoroethylene and a modifying monomer) is preferable.

Examples of the method (2) may include a method in which an oxidizing agent is added to the aqueous dispersion, thereby bringing the aqueous dispersion into contact with the oxidizing agent.

Examples of the oxidizing agent include gaseous oxidizing agents such as ozone gas, fluorine gas, chlorine gas, bromine gas, and iodine gas; inorganic acids and inorganic acid salts such as nitric acid, nitric acid, sulfurous acid, sulfuric acid, persulfuric acid, hydrochloric acid, hypochlorous acid, chlorous acid, chloric acid, perchloric acid, hydrofluoric acid, bromic acid, iodic acid, phosphoric acid, boric acid, chromic acid, dichromic acid, and permanganic acid; and peroxides such as hydrogen peroxide. Among these, hydrogen peroxide is particularly preferable as the oxidizing agent.

The amount of the oxidizing agent to be brought into contact with the aqueous dispersion is preferably 1 to 500 ppm by mass, more preferably 3 ppm by mass or more, and more preferably 200 ppm by mass or less, based on the mass of the aqueous dispersion.

The temperature at which the aqueous dispersion and the oxidizing agent are brought into contact is preferably 5 to 99°C, more preferably 15°C or higher, and more preferably lower than 35°C.

The pressure at which the aqueous dispersion and the oxidizing agent are brought into contact may be normal pressure.

The time for which the aqueous dispersion and the oxidizing agent are brought into contact is preferably 1 minute or longer, more preferably 5 minutes or longer, even more preferably 10 minutes or longer, and particularly preferably 30 minutes or longer, and is preferably 48 hours or shorter, more preferably 24 hours or shorter, and even more preferably 12 hours or shorter.

In one embodiment of the production method of the present disclosure, it is preferable to carry out a pretreatment of the aqueous dispersion using the method (2), thereby obtaining an aqueous dispersion having an oxygen saturation degree of 50.0% or higher. By sufficiently increasing the amount of oxygen dissolved in the aqueous dispersion prior to the addition of a radical generator to the aqueous dispersion, the content of the fluorine-containing compound in the aqueous dispersion can be reduced more efficiently. The oxygen saturation degree of the aqueous dispersion is preferably 60.0% or higher, more preferably 70.0% or higher, and even more preferably 80.0% or higher. The oxygen saturation degree of the aqueous dispersion may be 99% or lower.

In one embodiment of the production method of the present disclosure, it is preferable to carry out a pretreatment of the aqueous dispersion using the method (2), thereby obtaining an aqueous dispersion in which the content of a polymerization radical represented by general formula (1) is 0 $g^{-1}$ or less and the content of an oxidation radical represented by general formula (2) is 0.1 $g^{-1}$ or more. The content of the oxidation radical may be 9.0 $g^{-1}$ or less. The aqueous dispersion obtained by polymerizing tetrafluoroethylene, or tetrafluoroethylene and a modifying monomer, contains the polymerization radical represented by general formula (1). By converting the polymerization radical in the aqueous dispersion into the oxidation radical before adding a radical generator to the aqueous dispersion, the content of the fluorine-containing compound in the aqueous dispersion can be reduced more efficiently. The polymerization radical and the oxidation radical are as described above.

Examples of the method (3) may include a method in which an alcohol is added to the aqueous dispersion, thereby bringing the aqueous dispersion into contact with the alcohol. The aqueous dispersion obtained by polymerizing tetrafluoroethylene, or tetrafluoroethylene and a modifying monomer, contains the polymerization radical represented by general formula (1). When the aqueous dispersion is brought into contact with the alcohol, the polymerization radical contained in the aqueous dispersion abstracts H from a C-H bond of the alcohol, and the polymerization radical is deactivated. By deactivating the polymerization radical in the aqueous dispersion before adding a radical generator to the aqueous dispersion, the content of the fluorine-containing compound in the aqueous dispersion can be reduced more efficiently.

The alcohol is preferably an alcohol having 1 to 10 carbon atoms, more preferably at least one selected from the group consisting of methanol, ethanol, 1-propanol, 2-propanol, 1-butanol, and 2-butanol, and even more preferably at least one selected from the group consisting of methanol and ethanol.

The amount of the alcohol to be brought into contact with the aqueous dispersion is preferably 1 to 500 ppm by mass, more preferably 3 ppm by mass or more, and more preferably 200 ppm by mass or less, based on the mass of the aqueous dispersion.

The temperature at which the aqueous dispersion and the alcohol are brought into contact is preferably 5 to 99°C, more preferably 15°C or higher, and more preferably lower than 35°C.

The pressure at which the aqueous dispersion and the alcohol are brought into contact may be normal pressure.

The time for which the aqueous dispersion and the alcohol are brought into contact is preferably 1 minute or longer, more preferably 5 minutes or longer, even more preferably 10 minutes or longer, and particularly preferably 30 minutes or longer, and is preferably 48 hours or shorter, more preferably 24 hours or shorter, and even more preferably 12 hours or shorter.

In one embodiment of the production method of the present disclosure, it is preferable to carry out a pretreatment of the aqueous dispersion using the method (3), thereby obtaining an aqueous dispersion having an oxygen saturation degree of 50.0% or higher. By sufficiently increasing the amount of oxygen dissolved in the aqueous dispersion prior to the addition of a radical generator to the aqueous dispersion, the content of the fluorine-containing compound in the aqueous dispersion can be reduced more efficiently. The oxygen saturation degree of the aqueous dispersion is preferably 60.0% or higher, more preferably 70.0% or higher, and even more preferably 80.0% or higher. The oxygen saturation degree of the aqueous dispersion may be 99% or lower.

Examples of the method (4) may include a method in which an alkali such as ammonia is added to the aqueous dispersion, thereby adjusting the pH of the aqueous dispersion to 4.0 or higher. The aqueous dispersion obtained by polymerizing tetrafluoroethylene, or tetrafluoroethylene and a modifying monomer, contains the polymerization radical represented by general formula (1). When the pH of the aqueous dispersion is adjusted to 4.0 or higher, the reactivity of the polymerization radical contained in the aqueous dispersion is improved, and radicals are easily generated from a radical generator during heat treatment. As a result, by adjusting the pH of the aqueous dispersion to 4.0 or higher prior to the addition of a radical generator to the aqueous dispersion, the content of the fluorine-containing compound in the aqueous dispersion can be reduced more efficiently.

Since the pH of the aqueous dispersion obtained by polymerization is usually lower than 4.0, in the method (4), the pH of the aqueous dispersion is usually increased by adding an alkali.
In the method (4), the pH of the aqueous dispersion can preferably be adjusted to 5.0 or higher, more preferably 6.0 or higher, and even more preferably 7.0 or higher.

(Radical generator)

In the production method of the present disclosure, a radical generator is added to the aqueous dispersion after subjecting the aqueous dispersion to a pretreatment and before subjecting the aqueous dispersion to a heat treatment.
The radical generator is not limited as long as it is a compound that can generate radicals by being decomposed at the heat treatment temperature. The radical generator is preferably a water-soluble radical generator because radicals can be easily diffused in the aqueous dispersion.
Examples of the radical generator include organic peroxides, inorganic peroxides, organic azo compounds, and combinations of oxidizing agents and reducing agents, and preferable is at least one selected from the group consisting of inorganic peroxides, organic peroxides, and combinations of oxidizing agents and reducing agents, with inorganic peroxides being more preferable.
The inorganic peroxide is preferably a water-soluble inorganic peroxide. Examples of the inorganic peroxide include hydrogen peroxide, perchlorates, perborates, perphosphates, percarbonates, and persulfates, and a persulfate is preferable. The persulfate is preferably at least one selected from the group consisting of ammonium persulfate, sodium persulfate, and potassium persulfate, and more preferably ammonium persulfate.
The organic peroxide is preferably a water-soluble organic peroxide. Examples of the organic peroxide include peroxydicarbonates such as disuccinic acid peroxide and diglutaric acid peroxide.
The radical generator may be a combination of an oxidizing agent and a reducing agent. The use of a combination of an oxidizing agent and a reducing agent enables radicals to be generated from the radical generator through a redox reaction between the oxidizing agent and the reducing agent, and thus the temperature during heat treatment can be lowered.
Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of persulfates include ammonium persulfate and potassium persulfate. Examples of sulfites include sodium sulfite and ammonium sulfite. In order to increase the decomposition rate of the oxidizing agent, a copper salt or an iron salt is also preferably added. The copper salt may be copper(II) sulfate, and the iron salt may be iron(II) sulfate.
Examples of the combination of an oxidizing agent and a reducing agent include potassium permanganate/oxalic acid, ammonium persulfate/bisulfite/iron sulfate, manganese triacetate/oxalic acid, cerium ammonium nitrate/oxalic acid, and bromate/bisulfite, and potassium permanganate/oxalic acid is preferable. When using a combination of an oxidizing agent and a reducing agent, one of an oxidizing agent and a reducing agent may be added to the aqueous dispersion in advance, and then the other may be added continuously or intermittently.
From the viewpoint of increasing the efficiency of removing the fluorine-containing compound having a hydrophilic group, the amount of the radical generator added is preferably not less than 0.0001 mol times, more preferably not less than 0.001 mol times, and even more preferably not less than 0.01 mol times, and is preferably not more than 1,000 mol times, more preferably not more than 500 mol times, and even more preferably not more than 100 mol times, per mole of the fluorine-containing surfactant in the aqueous dispersion.
When the amount of the radical generator added is relatively large, the fluoropolymer in the aqueous dispersion may partially or entirely precipitate by heat treatment. Accordingly, in order to obtain an aqueous dispersion of low molecular weight polytetrafluoroethylene in which primary particles of low molecular weight polytetrafluoroethylene are stably dispersed in an aqueous medium, it is preferable to select the upper limit of the amount of the radical generator added. The amount of the radical generator added is preferably not more than 50 mol times, more preferably not more than 25 mol times, even more preferably less than 10 mol times, and particularly preferably less than 5 mol times, per mole of the fluorine-containing surfactant in the aqueous dispersion, because the precipitation of low molecular weight polytetrafluoroethylene can be suppressed without impairing the efficiency of removing the fluorine-containing compound having a hydrophilic group.
The method for adding the radical generator is not limited. The radical generator may be added as-is to the aqueous dispersion, or a solution containing the radical generator may be prepared and added to the aqueous dispersion. The radical generator may be added while stirring the aqueous dispersion, or the aqueous dispersion may be stirred after adding the radical generator.
The temperature of the aqueous dispersion to which the radical generator is added is not limited. After the radical generator is added to the aqueous dispersion, the aqueous dispersion may be heated for heat treatment, or after the aqueous dispersion is heated to the temperature for heat treatment, the radical generator may be added to the aqueous

dispersion.

The heat treatment may be performed while stirring the aqueous dispersion.

(Heat treatment)

After the radical generator is added to the aqueous dispersion to prepare an aqueous dispersion containing the radical generator, heat treatment is performed on the aqueous dispersion containing the radical generator.

The temperature of the heat treatment is not limited as long as it is at least a temperature at which the radical generator is decomposed to generate radicals (a decomposition temperature) or higher, and is preferably 35°C or higher, more preferably 40°C or higher, even more preferably 45°C or higher, and particularly preferably 50°C or higher, and is preferably 120°C or lower, more preferably 110°C or lower, even more preferably 100°C or lower, and particularly preferably 90°C or lower.

When the heat treatment temperature is relatively high, the fluoropolymer in the aqueous dispersion may partially or entirely precipitate by heat treatment. Accordingly, in order to obtain an aqueous dispersion of low molecular weight polytetrafluoroethylene in which primary particles of low molecular weight polytetrafluoroethylene are stably dispersed in an aqueous medium, it is preferable to select the upper limit of the heat treatment temperature. The heat treatment temperature is preferably 95°C or lower, more preferably 90°C or lower, and even more preferably 85°C or lower because the precipitation of low molecular weight polytetrafluoroethylene can be suppressed without impairing the efficiency of removing the fluorine-containing compound having a hydrophilic group.

In the heat treatment of the aqueous dispersion, it is not necessarily need to heat the aqueous dispersion as long as the aqueous dispersion can be maintained at a desired temperature or higher, but the heat treatment may be performed while heating the aqueous dispersion. The means of heating when performing the heat treatment while heating the aqueous dispersion is not limited. For example, a container accommodating the aqueous dispersion may be placed in a constant-temperature vessel and heated, or the aqueous dispersion may be accommodated in a container equipped with a heater, and heated by the heater.

The pressure during heat treatment is not limited, and may be normal pressure. For example, when the temperature during the heat treatment is relatively high, and boiling of the aqueous dispersion needs to be suppressed, the pressure during the heat treatment may exceed normal pressure.

The heat treatment time is not limited as long as the generated radicals sufficiently act on the components contained in the aqueous dispersion, and is preferably 15 minutes or longer, more preferably 30 minutes or longer, and even more preferably 60 minutes or longer, and is preferably 1,200 minutes or shorter, more preferably 900 minutes or shorter, and even more preferably 600 minutes or shorter.

The heat treatment may be performed while stirring the aqueous dispersion. Radicals are generated by decomposition of the radical generator by heat treatment, and when a combination of an oxidizing agent and a reducing agent is used as a radical generator, radicals are generated by thermal decomposition of the radical generator, and radicals are also generated by a redox reaction.

(Aqueous dispersion of low molecular weight polytetrafluoroethylene)

By the production method of the present disclosure, an aqueous dispersion of low molecular weight polytetrafluoroethylene can be obtained. Low molecular weight polytetrafluoroethylene may be a TFE homopolymer solely containing tetrafluoroethylene unit, or may be modified polytetrafluoroethylene containing TFE unit and a modifying monomer unit.

Low molecular weight polytetrafluoroethylene contained in the aqueous dispersion is polytetrafluoroethylene that is melt-fabricable and that does not fibrillate. On the other hand, high molecular weight polytetrafluoroethylene is polytetrafluoroethylene that is non melt-processible and that fibrillates.

Non-melt processibility means a property that the melt flow rate cannot be measured at a temperature higher than the crystal melting point in accordance with ASTM D 1238 and D 2116.

The presence or absence of fibrillatability can be determined by "paste extrusion", a representative method of forming a "high molecular weight polytetrafluoroethylene powder" which is a powder made from a polymer of tetrafluoroethylene. Usually, high molecular weight polytetrafluoroethylene can be paste-extruded because it is fibrillable. When a non-fired molded product obtained by paste extrusion shows substantially no strength or elongation (for example, when it shows an elongation of 0% and is broken when stretched), it can be regarded as non-fibrillable.

The melt viscosity at 380°C of low molecular weight polytetrafluoroethylene is preferably $1 \times 10^2$ to $7 \times 10^5$ Pa·s. The "low molecular weight" as used herein means that the melt viscosity is within the above range. High molecular weight polytetrafluoroethylene has a significantly higher melt viscosity than low molecular weight polytetrafluoroethylene, and it is difficult to accurately measure the melt viscosity thereof. The melt viscosity is a value measured while maintaining 2 g of a sample, which is heated for 5 minutes at 380°C in advance, at that temperature under a load of 0.7 MPa in accordance with

ASTM D 1238 using a flow tester (manufactured by Shimadzu Corporation) and a 2φ-8L die.

The peak temperature of low molecular weight polytetrafluoroethylene is preferably 322 to 333°C, is more preferably 323°C or higher and even more preferably 324°C or higher, and is more preferably 332°C or lower.

The peak temperature can be determined by drawing a DSC curve by heating low molecular weight polytetrafluoroethylene, which has no history of being heated to a temperature of 300°C or higher, at 10°C/min with a differential scanning calorimeter (DSC), and determining the temperature corresponding to the minimum point of the enthalpy of fusion in a temperature range of 250 to 380°C on a DSC curve.

In one embodiment of the aqueous dispersion obtained by the production method of the present disclosure, the aqueous dispersion contains a fluorine-containing compound having a hydrophilic group, and the content thereof is preferably 25 ppb by mass or less, more preferably 10 ppb by mass or less, even more preferably 5 ppb by mass or less, and yet more preferably less than 1 ppb by mass, and is preferably more than 0 ppb by mass, based on the mass of low molecular weight polytetrafluoroethylene in the aqueous dispersion.

In one embodiment, the aqueous dispersion obtained by the production method of the present disclosure contains a compound represented by the following general formula (H1) as the fluorine-containing compound having a hydrophilic group:

General formula (H1): $[X\text{-}Rf\text{-}A^-]_iM^{i+}$

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; $A^-$ is an acid group; $M^{i+}$ is a cation having a valence of i; and i represents an integer of 1 to 3.

In one embodiment, the aqueous dispersion obtained by the production method of the present disclosure contains a compound represented by the following general formula (H2) as the fluorine-containing compound having a hydrophilic group:

General formula (H2): $[C_{n-1}F_{2n-1}COO^-]M^+$

wherein n is an integer of 9 to 14, and $M^+$ represents a cation.

The compound represented by general formula (H2) (perfluoroalkanoic acid) is known to be formed during polymerization when perfluoro(alkyl vinyl ether) or the like is used as a monomer (see International Publication No. WO 2019/161153).

In one embodiment, the aqueous dispersion obtained by the production method of the present disclosure contains a compound represented by the following general formula (H3) as the fluorine-containing compound having a hydrophilic group:

General formula (H3): $[R^1\text{-}O\text{-}L\text{-}CO_2^-]M^+$

wherein $R^1$ is a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated, or fully fluorinated alkylene group; and $M^+$ represents a cation.

In one embodiment, the aqueous dispersion obtained by the production method of the present disclosure contains a compound represented by general formula (H4) as the fluorine-containing compound having a hydrophilic group:

General formula (H4): $H\text{-}Rf^{n0}\text{-}Y^0$

wherein $Rf^{n0}$ is a linear, branched, or cyclic alkylene group having 3 to 20 carbon atoms in which some or all of H are replaced by F, the alkylene group optionally containing one or more ether bonds in which some of H are optionally replaced by Cl; and $Y^0$ is an anionic group.

Examples of the compound represented by general formula (H4) include compounds represented by any of the following general formulae:

General formula (H4-1) : $[H\text{-}(CF_2)_{m1}CO_2^-]M^+$

wherein m1 is an integer of 3 to 20, and $M^+$ represents a cation; and

General formula (H4-2): $[H\text{-}(CF_2)_{m2}(CF(CF_3))_{m3}\text{-}CO_2^-]M^+$

wherein m2 is an integer of 1 to 17, m3 is an integer of 1 to 9, and $M^+$ represents a cation, provided that m2 and m3 are selected so as to satisfy $3 \leq (m2 + 2 \times m3) \leq 19$, and the repeating units occur in any order in the formula.

The content of the fluorine-containing compound having a hydrophilic group in the aqueous dispersion or the powder can be quantified by a known method. For example, the content can be quantified by LC/MS analysis.

First, methanol is added to the aqueous dispersion or the powder to perform extraction, and the resulting extract is subjected to LC/MS analysis. To further increase extraction efficiency, treatment by Soxhlet extraction, ultrasonic treatment, or the like may be performed. The resulting extract is suitably concentrated by nitrogen purging, and the fluorine-containing compound in the concentrated extract is measured by LC/MS.

From the resulting LC/MS spectrum, molecular weight information is extracted, and a match with the structural formula of a candidate fluorine-containing compound having a hydrophilic group is checked.

Thereafter, aqueous solutions having five or more different content levels of the confirmed fluorine-containing compound having a hydrophilic group are prepared, and LC/MS analysis of the aqueous solution of each content is carried out, and the relationship between the content and the area for the content is plotted, and a calibration curve is drawn.

Then, using the calibration curve, the area of the LC/MS chromatogram of the fluorine-containing compound having a hydrophilic group in the extract can be converted to the content of the fluorine-containing compound having a hydrophilic group.

Note that the resulting extract can be concentrated by nitrogen purging, thus enabling the lower quantification limit of the measurement method to be lowered.

(Preparation of wet powder and drying of wet powder)

In the production method of the present disclosure, after obtaining the aqueous dispersion of low molecular weight polytetrafluoroethylene by the above-described production method, low molecular weight polytetrafluoroethylene in the aqueous dispersion may be coagulated to produce a wet powder containing particles of low molecular weight polytetrafluoroethylene, and the wet powder may be dried to produce a powder.

The method for coagulating low molecular weight polytetrafluoroethylene is not limited. For example, the aqueous dispersion is diluted with water so as to have a polymer concentration of 5 to 20% by mass, optionally the pH is regulated to be neutral or alkaline, and then the dispersion is stirred in a vessel equipped with a stirrer more vigorously than the stirring during the polymerization of tetrafluoroethylene. Low molecular weight polytetrafluoroethylene may be coagulated by adding a water-soluble organic compound such as methanol or acetone, an inorganic salt such as potassium nitrate or ammonium carbonate, or an inorganic acid such as hydrochloric acid, sulfuric acid, or nitric acid as a coagulating agent to the aqueous dispersion, and stirring the mixture. After low molecular weight polytetrafluoroethylene is coagulated, a wet powder containing particles of low molecular weight polytetrafluoroethylene can be recovered.

Before drying the wet powder, the wet powder may be washed. The wet powder can be washed with water or an organic solvent. Washing may be performed one or more times. Examples of the organic solvent used in washing include ethers, halogenated hydrocarbons, aromatic hydrocarbons, pyridines, nitriles, nitrogen-containing polar organic compounds, dimethyl sulfoxide, and alcohols.

In the production method of the present disclosure, the drying of the wet powder can be carried out at a relatively low temperature. By drying the wet powder at a relatively low temperature, a powder having a small particle size and excellent fine dispersibility in other materials can be obtained.

The drying temperature of the wet powder is preferably not higher than a temperature that is 70°C lower than the peak temperature of low molecular weight polytetrafluoroethylene, and more preferably not higher than a temperature that is 100°C lower than the peak temperature of low molecular weight polytetrafluoroethylene.

The drying temperature of the wet powder is preferably 250°C or lower, more preferably 230°C or lower, and even more preferably 220°C or lower.

The drying temperature of the wet powder is preferably 100°C or higher, more preferably 120°C or higher, even more preferably 140°C or higher, and yet more preferably 160°C or higher. An excessively low drying temperature results in a long drying time and possibly an impaired productivity.

The resulting powder may be classified or may be granulated. Also, the resulting powder may be pelletized. In the production method of the present disclosure, a powder having excellent fine dispersibility in other materials is directly obtained after drying and, accordingly, it is also a preferable embodiment that no after-treatment is performed on the dried powder.

(Applications)

The aqueous dispersion and the powder obtained by the production method of the present disclosure can be suitably used in a molding material, an ink, a cosmetic, a coating material, a grease, a component of office automation equipment, an additive for modifying toners, an additive for plating solutions, or the like. Examples of the molding material

include engineering plastics such as polyoxybenzoyl polyester, polyimide, polyamide, polyamide-imide, polyacetal, polycarbonate, and polyphenylene sulfide. The powder is particularly suitable as a grease thickening agent.

The aqueous dispersion and powder can be used as additives for molding materials, for example, for improving the non-stickiness and sliding property of copier rollers, for use in improving the texture of molded articles of engineering plastics, such as surface sheets of furniture, dashboards of automobiles, and covers of home appliances, and for use in improving the lubricity and abrasion resistance of machine elements that generate mechanical friction, such as light-load bearings, gears, cams, buttons of push-button telephones, movie projectors, camera components, and sliding materials.

The aqueous dispersion and powder can be used as an additive for a coating material for the purpose of improving the lubricity of varnish or paint. The aqueous dispersion and powder of the present disclosure can be used as an additive for cosmetics for the purpose of improving the lubricity of cosmetics such as foundation and the like.

The powder is also suitable for use in improving the oil-repellency or water-repellency of wax or the like, or in improving the lubricity of grease or toner.

The aqueous dispersion and powder can be used as an electrode binder for secondary batteries and fuel cells, a hardness adjuster for electrode binders, a water-repellent for electrode surfaces, and the like.

The powder and lubricating oil can be used to prepare grease. The grease contains the powder and lubricating oil, accordingly the powder is uniformly and stably dispersed in the lubricating oil, and the grease has excellent properties with respect to load-bearing capacity, electrical insulation, low moisture absorption, and the like.

The lubricating oil (base oil) may be mineral oil or synthetic oil. Examples of the lubricating oil (base oil) include paraffinic or naphthenic mineral oil, and synthetic oil such as synthetic hydrocarbon oil, ester oil, fluorinated oil, or silicone oil. Fluorinated oil is preferable from the viewpoint of heat resistance. Examples of the fluorinated oil include perfluoropolyether oil and a low polymer of trifluorochloroethylene. The low polymer of trifluorochloroethylene may have a weight average molecular weight of 500 to 1,200.

The grease may further contain a thickener. Examples of the thickener include metal soap, composite metal soap, bentonite, phthalocyanine, silica gel, urea compounds, urea-urethane compounds, urethane compounds, and imide compounds. Examples of the metal soap include sodium soap, calcium soap, aluminum soap, and lithium soap. Examples of the urea compounds, urea-urethane compounds, and urethane compounds include diurea compounds, triurea compounds, tetraurea compounds, other polyurea compounds, urea-urethane compounds, diurethane compounds, and mixtures thereof.

The grease preferably contains the powder in an amount of 0.1 to 50% by mass, more preferably 0.5% by mass or more, and more preferably 30% by mass or less. An excessive amount of the powder results in an excessively hard grease and, possibly, sufficient lubricating properties cannot be attained, while an excessively small amount of the powder possibly fails to provide sufficient sealability.

The grease may also contain a solid lubricant, an extreme pressure agent, an antioxidant, an oiliness improver, a rust inhibitor, a viscosity index improver, a detergent-dispersant, and the like.

While embodiments have been described above, it will be understood that various changes in form and detail can be made without departing from the gist and scope of the claims.

<1> According to the first aspect of the present disclosure, provided is a method for producing a low molecular weight polytetrafluoroethylene aqueous dispersion, the method comprising:

polymerizing tetrafluoroethylene in the presence of a fluorine-containing surfactant, a polymerization initiator, a hydrocarbon chain transfer agent, and an aqueous medium to prepare an aqueous dispersion containing a low molecular weight polytetrafluoroethylene;
subjecting the resulting aqueous dispersion to a pretreatment; and
adding a radical generator to a pretreated aqueous dispersion and subjecting an aqueous dispersion containing the radical generator to a heat treatment, thereby obtaining the low molecular weight polytetrafluoroethylene aqueous dispersion.

<2> According to the second aspect of the present disclosure, provided is
the production method according to the first aspect, wherein the pretreatment of the aqueous dispersion is carried out by at least one of the following methods:

(1) a method in which the aqueous dispersion is brought into contact with a gas containing oxygen;
(2) a method in which the aqueous dispersion is brought into contact with an oxidizing agent;
(3) a method in which the aqueous dispersion is brought into contact with an alcohol; and
(4) a method in which a pH of the aqueous dispersion is adjusted to 4.0 or higher.

<3> According to the third aspect of the present disclosure, provided is

the production method according to the first or second aspect, wherein the pretreatment of the aqueous dispersion is carried out by a method in which the aqueous dispersion is brought into contact with a gas containing oxygen, thereby obtaining the aqueous dispersion having an oxygen saturation degree of 50.0% or higher.

<4> According to the fourth aspect of the present disclosure, provided is

the production method according to any one of the first to third aspects, wherein the pretreatment of the aqueous dispersion is carried out by bubbling a gas containing oxygen into the aqueous dispersion or by stirring the aqueous dispersion in air, thereby bringing the aqueous dispersion into contact with a gas containing oxygen.

<5> According to the fifth aspect of the present disclosure, provided is

the production method according to any one of the first to fourth aspects, wherein the pretreatment of the aqueous dispersion is carried out by a method in which the aqueous dispersion is brought into contact with a gas containing oxygen, thereby obtaining the aqueous dispersion in which a content of a polymerization radical represented by general formula (1) is 0 $g^{-1}$ or less and a content of an oxidation radical represented by general formula (2) is 0.1 $g^{-1}$ or more:

General formula (1): $R\text{-}(CF_2\text{-}CF_2)_n\cdot$ (wherein R is a monovalent group, n is an integer of 1 or more, and · represents an unpaired electron); and

General formula (2): $R\text{-}(CF_2\text{-}CF_2)_nO\text{-}O\cdot$ (wherein R is a monovalent group, n is an integer of 1 or more, and · represents an unpaired electron).

<6> According to the sixth aspect of the present disclosure, provided is

the production method according to the first or second aspect, wherein the pretreatment of the aqueous dispersion is carried out by a method in which the aqueous dispersion is brought into contact with an oxidizing agent, thereby obtaining the aqueous dispersion having an oxygen saturation degree of 50.0% or higher.

<7> According to the seventh aspect of the present disclosure, provided is

the production method according to the second or sixth aspect, wherein the oxidizing agent is hydrogen peroxide.

<8> According to the eighth aspect of the present disclosure, provided is

the production method according to any one of the first, second, sixth, and seventh aspects, wherein the pretreatment of the aqueous dispersion is carried out by a method in which the aqueous dispersion is brought into contact with an oxidizing agent, thereby obtaining the aqueous dispersion in which a content of a polymerization radical represented by general formula (1) is 0 $g^{-1}$ or less and a content of an oxidation radical represented by general formula (2) is 0.1 $g^{-1}$ or more:

General formula (1): $R\text{-}(CF_2\text{-}CF_2)_n\cdot$ (wherein R is a monovalent group, n is an integer of 1 or more, and · represents an unpaired electron); and

General formula (2): $R\text{-}(CF_2\text{-}CF_2)_nO\text{-}O\cdot$ (wherein R is a monovalent group, n is an integer of 1 or more, and · represents an unpaired electron).

<9> According to the ninth aspect of the present disclosure, provided is

the production method according to the first or second aspect, wherein the pretreatment of the aqueous dispersion is carried out by a method in which the aqueous dispersion is brought into contact with an alcohol, thereby obtaining an aqueous dispersion having an oxygen saturation degree of 50.0% or higher.

<10> According to the tenth aspect of the present disclosure, provided is

the production method according to the second or ninth aspect, wherein the alcohol is at least one selected from the group consisting of methanol, ethanol, 1-propanol, 2-propanol, 1-butanol, and 2-butanol.

<11> According to the eleventh aspect of the present disclosure, provided is

the production method according to any one of the first to tenth aspects, wherein the polymerization initiator is a water-soluble radical polymerization initiator.

<12> According to the twelfth aspect of the present disclosure, provided is

the production method according to any one of the first to eleventh aspects, wherein a temperature of the heat treatment is equal to or higher than a decomposition temperature of the radical generator.

<13> According to the thirteenth aspect of the present disclosure, provided is

the production method according to any one of the first to twelfth aspects, wherein the radical generator is an inorganic peroxide.

<14> According to the fourteenth aspect of the present disclosure, provided is

the production method according to any one of the first to thirteenth aspects, wherein the low molecular weight polytetrafluoroethylene has a peak temperature of 322 to 333°C.

<15> According to the fifteenth aspect of the present disclosure, provided is

the production method according to any one of the first to fourteenth aspects, wherein the low molecular weight

polytetrafluoroethylene has a melt viscosity at 380°C of $1 \times 10^2$ to $7 \times 10^5$ Pa·s.
<16> According to the sixteenth aspect of the present disclosure, provided is
the production method according to any one of the first to fifteenth aspects, wherein the polymerization initiator is a persulfate, the hydrocarbon chain transfer agent is an alkane having 1 to 5 carbon atoms, and the pretreatment is carried out by the method (1) in which the aqueous dispersion is brought into contact with a gas containing oxygen, thereby obtaining the aqueous dispersion having an oxygen saturation degree of 50.0% or higher.
<17> According to the seventeenth aspect of the present disclosure, provided is

the production method according to any one of the first to sixteenth aspects,
wherein the polymerization initiator is a persulfate and the hydrocarbon chain transfer agent is an alkane having 1 to 5 carbon atoms,
wherein, after preparing the aqueous dispersion containing the low molecular weight polytetrafluoroethylene, the pretreatment of the aqueous dispersion is carried out by:

(1-1-1) recovering the aqueous dispersion in a reactor and accommodating it in a container different from the reactor, thereby bringing the aqueous dispersion into contact with a gas containing oxygen to obtain the aqueous dispersion having an oxygen saturation degree of 50.0 to 70.0%,
and then
(1-1-2) bubbling a gas containing 20 to 100% by volume of oxygen into the aqueous dispersion at a flow rate of 1 to 30 L/min to generate bubbles and bring the aqueous dispersion into contact with the gas containing oxygen at 5 to 99°C for 5 minutes or longer; or
(2-1) bringing the aqueous dispersion into contact with hydrogen peroxide in an amount corresponding to 1 to 500 ppm by mass ppm based on a mass of the aqueous dispersion at 5 to 99°C for 1 minute or longer; or
(3-1) bringing the aqueous dispersion into contact with an alcohol having 1 to 10 carbon atoms in an amount corresponding to 1 to 500 ppm by mass based on a mass of the aqueous dispersion at 5 to 99°C for 1 minute or longer; or
(4-1) adding an alkali to the aqueous dispersion to adjust a pH of the aqueous dispersion to 4.0 or higher, thereby obtaining an aqueous dispersion having an oxygen saturation degree of 80% or higher, and

wherein a persulfate is added to the pretreated aqueous dispersion in an amount of 0.01 to 5 mol times per mole of the fluorine-containing surfactant in the aqueous dispersion, and the aqueous dispersion containing the persulfate is subjected to the heat treatment at 35 to 95°C for 15 minutes or longer, thereby obtaining the low molecular weight polytetrafluoroethylene aqueous dispersion.

<18> According to the eighteenth aspect of the present disclosure, provided is
a method for producing a powder of the low molecular weight polytetrafluoroethylene, the method comprising:

obtaining the low molecular weight polytetrafluoroethylene aqueous dispersion by the production method according to any one of the first to seventeenth aspects;
then coagulating the low molecular weight polytetrafluoroethylene in the aqueous dispersion, thereby producing a wet powder containing particles of the low molecular weight polytetrafluoroethylene; and
drying the wet powder, thereby producing the powder.

EXAMPLES

Next, embodiments of the present disclosure will now be described by way of Examples, but the present disclosure is not limited only to the Examples.
The numerical values in the Examples were measured by the following methods.

<Radical amount in aqueous dispersion>

The contents of the polymerization radical and the oxidation radical in the aqueous dispersion were determined using electron spin resonance (ESR) spectroscopy.

Polymerization radical: $HOOC\text{-}(CF_2\text{-}CF_2)_n\cdot$ (wherein n is an integer of 1 or more, and · represents an unpaired electron)
Oxidation radical: $HOOC\text{-}(CF_2\text{-}CF_2)_nO\text{-}O\cdot$ (wherein n is an integer of 1 or more, and · represents an unpaired electron)

The content of the polymerization radical was determined from the intensity of the peak at g = 2.0056 appearing in the first derivative spectrum obtained by analyzing the aqueous dispersion using electron spin resonance (ESR) spectroscopy. The content of the oxidation radical was determined from the intensity of the peak at g = 2.0218 appearing in the first derivative spectrum obtained by analyzing the aqueous dispersion using electron spin resonance (ESR) spectroscopy.

Analytical conditions

Device: JES-FR30EX manufactured by JEOL Ltd.
Measurement temperature: 23 ± 3°C
Microwave frequency: 9.42 GHz
Microwave output: 0.4 mW
Center magnetic field: 347.548 mT
Sweep width: ±25 mT
Sweep time: 60 s
Time constant: 0.03 s
Magnetic field modulation amplitude: 0.32 mT
Number of scans: 1
Modulation frequency: 100 kHz
Marker: $Mn^{2+}$

<Oxygen saturation degree>

The measurement was conducted using an optical dissolved oxygen meter FDO380.

<Solid concentration of aqueous dispersion>

One gram of an aqueous dispersion was dried in an air dryer under at 150°C for 60 minutes, and a value expressed in percentage that is the proportion of the mass of the heating residue to the mass (1 g) of the aqueous dispersion was used as a solid concentration.

<Melt viscosity>

The melt viscosity was measured while maintaining 2 g of a sample, which was heated at 380°C for 5 minutes in advance, at that temperature under a load of 0.7 MPa in accordance with ASTM D 1238 using a Koka-type (constant-load orifice-type) flow tester (manufactured by Shimadzu Corporation) and a 2Φ-8L die.

<Peak temperature>

The peak temperature was measured using TG/DTA (thermogravimetric - differential thermal analyzer) by precisely weighing about 10 mg of a PTFE powder, which had no history of being heated to a temperature of 300°C or higher, and storing it in a dedicated aluminum pan. A differential thermal (DTA) curve by heating the aluminum pan under the condition of 10°C/min in a temperature range from 25°C to 600°C in air was obtained, and the temperature corresponding to the maximum value of the resulting differential thermal (DTA) curve was regarded as the peak temperature.

<Content of compound represented by general formula (H4-1) in PTFE aqueous dispersion and PTFE powder>

The content of the fluorine-containing compound contained in the powder and the dispersion was determined as the content of the fluorine-containing compound extracted from the powder and the dispersion.

0-1. Extraction of fluorine-containing compound from powder

First, 10 g (12.6 mL) of methanol was added to 1 g of the powder, and the mixture was subjected to ultrasonication at 60°C for 2 hours. After the mixture was left to stand at room temperature, solid matter was removed to give an extract.

0-2. Extraction of fluorine-containing compound from dispersion

The dispersion and methanol were mixed at a weight ratio of 1:1 and shaken to precipitate the powder. The supernatant was passed through a membrane filter to remove solid matter, thereby obtaining an extract.

The content of the compound represented by general formula (H4-1) was determined in terms of perfluorooctanoic acid.

1. Creation of calibration curve

Methanol standard solutions of perfluorooctanoic acid having five known concentration levels were prepared, and measurement was made using a liquid chromatograph-mass spectrometer (Waters, LC-MS ACQUITY UPLC/TQD). From the concentrations of the methanol standard solutions and peak integral values thereof at respective concentration ranges, first-order approximation was used to determine each of a and b according to the following expression:

$$A = a \times X + b.$$

A: Peak area of perfluorocarboxylic acid (perfluorooctanoic acid)
X: Concentration of perfluorocarboxylic acid (perfluorooctanoic acid) (ng/mL)

Measuring instrument configuration and LC-MS measurement conditions

[Table 1]

Table 1

| LC unit | | | |
|---|---|---|---|
| Device | Acquity UPLC manufactured by Waters | | |
| Column | Acquity UPLC BEH Shield RP18 1.7 μm (2.1 × 50 mm) manufactured by Waters | | |
| Mobile phase | A $CH_3CN$ | | |
| | B 20mM $CH_3COONH_4/H_2O$ | | |
| | | 0→1.5min | A:B=10:90 |
| | | 1.5→8.5min | A:B=10:90 → A:B=90:10 Linear gradient |
| | | 8.5→10min | A:B=90:10 |
| Flow rate | | 0.4mL/min | |
| Column temperature | 40°C | | |
| Sample Injection volume | 5 μL | | |
| **MS unit** | | | |
| Device | TQ Detecter | | |
| Measurement mode | MRM(Multiple Reaction Monitoring) | | |
| Ionization method | Electrospray Ionization<br>Negative mode | | |

MRM measurement parameters

[Table 2]

Table 2 MRM measurement parameters

| Compound | Number of carbon atoms | Precursor | Product |
|---|---|---|---|
| Perfluorooctanoic acid | B | 413 | 369 |

2. Measurement of content

The content of the compound represented by general formula (H4-1), having the number of carbon atoms (m1 + 1), and contained in the extract was measured from a calibration curve using a liquid chromatograph-mass spectrometer.

The content of the compound represented by general formula (H4-1), having the number of carbon atoms (m1 + 1), and contained in the powder was determined using the following relational expression (1):

$$Ym = Xm \times 12.6 \quad (1)$$

Ym: Content (ppb by mass/resin) of compound represented by general formula (H4-1), having the number of carbon atoms (m1 + 1) and contained in powder

Xm: Content (ng/mL) of compound represented by general formula (H4-1), having the number of carbon atoms (m1 + 1) and contained in extract

The content of the compound represented by general formula (H4-1), having the number of carbon atoms (m1 + 1), and contained in the aqueous dispersion was determined using the following relational expression (2):

$$Ym = Xm \times (1.26 + (100 - P)/100)/(P/100) \quad (1)$$

Ym: Content (ppb by mass/resin) of compound represented by general formula (H4-1), having the number of carbon atoms (m1 + 1) and contained in aqueous dispersion

Xm: Content (ng/mL) of compound represented by general formula (H4-1), having the number of carbon atoms (m1 + 1) and contained in extract

P: Solid concentration (% by mass) of aqueous dispersion

The lower quantification limit of the content of the compound represented by general formula (H4-1), having the number of carbon atoms (m1 + 1), and contained in the aqueous dispersion was 1.26 + (100 - P)/100)/(P/100) ppb by mass/resin.

The lower quantification limit of the content of the compound represented by general formula (H4-1), having the number of carbon atoms (m1 + 1), and contained in the powder was 13 ppb by mass/resin.

MRM measurement parameters

[Table 3]

Table 3 MRM measurement parameters

| Compound | Number of carbon atoms | Precursor | Product |
|---|---|---|---|
| $[H\text{-}(CF_2)_3CO_2^-]M^+$ | 4 | 195 | 131 |
| $[H\text{-}(CF_2)_4CO_2^-]M^+$ | 5 | 245 | 181 |
| $[H\text{-}(CF_2)_5CO_2^-]M^+$ | 6 | 295 | 231 |
| $[H\text{-}(CF_2)_6CO_2^-]M^+$ | 7 | 345 | 281 |
| $[H\text{-}(CF_2)_7CO_2^-]M^+$ | B | 395 | 331 |
| $[H\text{-}(CF_2)_8CO_2^-]M^+$ | 9 | 445 | 381 |
| $[H\text{-}(CF_2)_9CO_2^-]M^+$ | 10 | 495 | 431 |
| $[H\text{-}(CF_2)_{10}CO_2^-]M^+$ | 11 | 545 | 481 |
| $[H\text{-}(CF_2)_{11}CO_2^-]M^+$ | 12 | 595 | 531 |
| $[H\text{-}(CF_2)_{12}CO_2^-]M^+$ | 13 | 645 | 581 |
| $[H\text{-}(CF_2)_{13}CO_2^-]M^+$ | 14 | 695 | 631 |
| $[H\text{-}(CF_2)_{14}CO_2^-]M^+$ | 15 | 745 | 681 |
| $[H\text{-}(CF_2)_{15}CO_2^-]M^+$ | 16 | 795 | 731 |
| $[H\text{-}(CF_2)_{16}CO_2^-]M^+$ | 17 | 845 | 781 |
| $[H\text{-}(CF_2)_{17}CO_2^-]M^+$ | 18 | 895 | 831 |

(continued)

| Compound | Number of carbon atoms | Precursor | Product |
|---|---|---|---|
| $[H-(CF_2)_{18}CO_2^-]M^+$ | 19 | 945 | 881 |
| $[H-(CF_2)_{19}CO_2^-]M^+$ | 20 | 995 | 931 |
| $[H-(CF_2)_{20}CO_2^-]M^+$ | 21 | 1045 | 981 |

Comparative Example 1

A polymerization reaction of TFE was carried out by the method in accordance with Example 7 of International Publication No. WO 2009/020187, obtaining a PTFE aqueous dispersion 1. PTFE aqueous dispersion 1 was obtained in an amount of 4 kg. The oxygen saturation degree was 0%.

Comparative Example 2

In the same manner as in Comparative Example 1, PTFE aqueous dispersion 1 was polymerized. The oxygen saturation degree was 0%.

Thereafter, without opening the autoclave, nitrogen gas was repeatedly injected and degassed several times for nitrogen blowing. Then, under stirring, the temperature inside the vessel was raised, and when the temperature inside the vessel reached 80°C, an aqueous solution in which 1.2 g of ammonium persulfate [APS] was dissolved was pressurized into the vessel with nitrogen to set the pressure inside the vessel to 0.60 MPa. Heat treatment was carried out by stirring for 3 hours, thereby obtaining PTFE aqueous dispersion 2. PTFE aqueous dispersion 2 was obtained in an amount of 4 kg. The solid concentration was 15.4% by mass.

Example 1

In the same manner as in Comparative Example 1, PTFE aqueous dispersion 1 was polymerized. The pH of PTFE aqueous dispersion 1 was 3.4. Thereafter, the autoclave was opened, and 4 kg of the obtained PTFE aqueous dispersion 1 was transferred to another container. The oxygen saturation degree was 53.4%, the amount of the polymerization radical was 0 $g^{-1}$, and the amount of the oxidation radical was 4.0 $g^{-1}$. Oxygen was removed from the system by repeatedly injecting nitrogen gas and degassing it several times. Then, under stirring, the temperature inside the vessel was raised, and when the temperature inside the vessel reached 80°C, an aqueous solution in which 1.2 g of ammonium persulfate [APS] was dissolved was pressurized into the vessel with nitrogen to set the pressure inside the vessel to 0.60 MPa. Heat treatment was carried out by stirring for 3 hours, thereby obtaining PTFE aqueous dispersion 3. The solid concentration was 15.9% by mass.

Example 2

Except that the amount of ammonium persulfate [APS] added in the heat treatment was changed to 11.7 g, the same operations as Example 1 were performed. The oxygen saturation degree of the aqueous dispersion after transfer to another container was 53.4%, the amount of the polymerization radical was 0 $g^{-1}$, and the amount of the oxidation radical was 4.0 $g^{-1}$. The PTFE contained in the aqueous dispersion after polymerization partially aggregated due to the heat treatment, and a PTFE aqueous dispersion and PTFE wet powder 1 were obtained. The solid concentration of the PTFE aqueous dispersion was 0.1% by mass.

Comparative Example 3

To 4 kg of the above-described PTFE aqueous dispersion 1, 85.8 g of 10 mass% aqueous nitric acid solution was added and subjected to intense mechanical shear to induce coagulation. Subsequently, 12.6 g of 24 mass% aqueous sodium hydroxide solution was added for neutralization. The resulting wet powder was then filtered and washed with 4200 g of fresh pure water. After repeating this washing operation six times, the powder was dried for 18 hours in a hot air circulation dryer at 100°C to give a PTFE powder. Various physical properties of the resulting PTFE powder were measured. The melt viscosity of the PTFE powder was $2.2 \times 10^4$ Pa·s, and the peak temperature was 329°C. Accordingly, it was found that the resulting PTFE powder is low molecular weight PTFE.

Comparative Example 4

Except that the above-described PTFE aqueous dispersion 2 was used, a PTFE powder was obtained in the same manner as in Comparative Example 3. Various physical properties of the resulting PTFE powder were measured. The melt viscosity of the PTFE powder was $2.2 \times 10^4$ Pa·s, and the peak temperature was 329°C. Accordingly, it was found that the resulting PTFE powder is low molecular weight PTFE.

Example 3

Except that the above-described PTFE aqueous dispersion 3 was used, a PTFE powder was obtained in the same manner as in Comparative Example 3. Various physical properties of the resulting PTFE powder were measured. The melt viscosity of the PTFE powder was $2.2 \times 10^4$ Pa·s, and the peak temperature was 329°C. Accordingly, it was found that the resulting PTFE powder is low molecular weight PTFE.

Example 4

The above-described PTFE wet powder 1 was washed with 4200 g of pure water. After repeating this washing operation six times, the powder was dried for 18 hours in a hot air circulation dryer at 100°C to give a PTFE powder. Various physical properties of the resulting PTFE powder were measured. The melt viscosity of the PTFE powder was $2.2 \times 10^4$ Pa·s, and the peak temperature was 329°C. Accordingly, it was found that the resulting PTFE powder is low molecular weight PTFE.

Example 5

Except that the heat treatment time was set to 1 hour, a PTFE aqueous dispersion was obtained in the same manner as in Example 1. The oxygen saturation degree of the aqueous dispersion after transfer to another container was 53.4%, the amount of the polymerization radical was 0 $g^{-1}$, and the amount of the oxidation radical was 4.0 $g^{-1}$. The solid concentration was 14.7% by mass.

Example 6

Except that the heat treatment time was set to 0.5 hours, a PTFE aqueous dispersion was obtained in the same manner as in Example 1. The oxygen saturation degree of the aqueous dispersion after transfer to another container was 53.4%, the amount of the polymerization radical was 0 $g^{-1}$, and the amount of the oxidation radical was 4.0 $g^{-1}$. The solid concentration was 15.5% by mass.

Example 7

In the same manner as in Comparative Example 1, PTFE aqueous dispersion 1 was polymerized. The autoclave was opened, and 4 kg of the obtained PTFE aqueous dispersion 1 was transferred to another container, into which air was bubbled at a flow rate of 2 L/min for 1 hour to perform bubbling. The oxygen saturation degree of the aqueous dispersion was 97.3%, the amount of the polymerization radical was 0 $g^{-1}$, and the amount of the oxidation radical was 7.0 $g^{-1}$.

Thereafter, oxygen was removed from the system by repeatedly injecting nitrogen gas and degassing it several times. Then, under stirring, the temperature inside the vessel was raised, and when the temperature inside the vessel reached 80°C, an aqueous solution in which 1.2 g of ammonium persulfate [APS] was dissolved was pressurized into the vessel with nitrogen to set the pressure inside the vessel to 0.60 MPa. Heat treatment was carried out by stirring for 0.5 hours, thereby obtaining a PTFE aqueous dispersion. The solid concentration was 15.8% by mass.

Example 8

Except that the heat treatment time was set to 1 hour, a PTFE aqueous dispersion was obtained in the same manner as in Example 7. The oxygen saturation degree of the aqueous dispersion after bubbling was 97.3%, the amount of the polymerization radical was 0 $g^{-1}$, and the amount of the oxidation radical was 7.0 $g^{-1}$. The solid concentration was 15.4% by mass.

Reference Example 5

Except that the gas used for bubbling was changed to nitrogen and that the flow rate was set to 5 L/min, a PTFE

aqueous dispersion was obtained in the same manner as in Example 7. The oxygen saturation degree of the aqueous dispersion after bubbling was 87.4%, the amount of the polymerization radical was 0 $g^{-1}$, and the amount of the oxidation radical was 6.4 $g^{-1}$. The solid concentration was 15.4% by mass.

Example 9

Except that the flow rate of air was set to 5 L/min, that the bubbling time was set to 0.1 hours, and that the heat treatment time was set to 0.5 hours, a PTFE aqueous dispersion was obtained in the same manner as in Example 7. The oxygen saturation degree of the aqueous dispersion after bubbling was 88.5%, the amount of the polymerization radical was 0 $g^{-1}$, and the amount of the oxidation radical was 6.5 $g^{-1}$. The solid concentration was 15.9% by mass.

Example 10

Except that the bubbling time was set to 0.5 hours, a PTFE aqueous dispersion was obtained in the same manner as in Example 9. The oxygen saturation degree of the aqueous dispersion after bubbling was 97.4%, the amount of the polymerization radical was 0 $g^{-1}$, and the amount of the oxidation radical was 7.0 $g^{-1}$. The solid concentration was 15.8% by mass.

Example 11

Except that the bubbling time was set to 1 hour, a PTFE aqueous dispersion was obtained in the same manner as in Example 9. The oxygen saturation degree of the aqueous dispersion after bubbling was 97.4%, the amount of the polymerization radical was 0 $g^{-1}$, and the amount of the oxidation radical was 7.2 $g^{-1}$. The solid concentration was 15.9% by mass.

Example 12

Except that the bubbling time was set to 2 hours, a PTFE aqueous dispersion was obtained in the same manner as in Example 9. The oxygen saturation degree of the aqueous dispersion after bubbling was 97.4%, the amount of the polymerization radical was 0 $g^{-1}$, and the amount of the oxidation radical was 7.0 $g^{-1}$. The solid concentration was 15.9% by mass.

Example 13

In the same manner as in Comparative Example 1, PTFE aqueous dispersion 1 was polymerized. The autoclave was opened, and 4 kg of the obtained PTFE aqueous dispersion 1 was transferred to another container. Under stirring, the temperature inside the vessel was raised, and when the temperature inside the vessel reached 80°C, an aqueous solution in which 3.5 g of hydrogen peroxide [$H_2O_2$] as an oxidizing agent was dissolved in 10 ml of deionized water was added, and the mixture was stirred in an air atmosphere for 10 minutes. The oxygen saturation degree of the aqueous dispersion was 90.0%, the amount of the polymerization radical was 0 $g^{-1}$, and the amount of the oxidation radical was 7.0 $g^{-1}$. Thereafter, oxygen was removed from the system by repeatedly injecting nitrogen gas and degassing it several times. Then, an aqueous solution in which 1.2 g of ammonium persulfate [APS] was dissolved was pressurized into the vessel with nitrogen to set the pressure inside the vessel to 0.60 MPa. Heat treatment was carried out by stirring for 0.5 hours, thereby obtaining a PTFE aqueous dispersion. The solid concentration was 15.0% by mass.

Example 14

Except that the amount of $H_2O_2$ added was changed to 35.4 g, a PTFE aqueous dispersion was obtained in the same manner as in Example 13. The oxygen saturation degree of the aqueous dispersion after the addition of $H_2O_2$ and stirring was 93.0%, the amount of the polymerization radical was 0 $g^{-1}$, and the amount of the oxidation radical was 7.2 $g^{-1}$. The solid concentration was 14.7% by mass.

Example 15

Except that the aqueous hydrogen peroxide solution was changed to 1.7 g of methanol [MeOH], a PTFE aqueous dispersion was obtained in the same manner as in Example 13. The oxygen saturation degree of the aqueous dispersion after the addition of MeOH and stirring was 88.0%, the amount of the polymerization radical was 0 $g^{-1}$, and the amount of the oxidation radical was 3.9 $g^{-1}$. The solid concentration was 15.4% by mass.

Example 16

Except that the amount of MeOH added was changed to 16.8 g, a PTFE aqueous dispersion was obtained in the same manner as in Example 15. The oxygen saturation degree of the aqueous dispersion after the addition of MeOH and stirring was 88.0%, the amount of the polymerization radical was 0 $g^{-1}$, and the amount of the oxidation radical was 2.6 $g^{-1}$. The solid concentration was 15.3% by mass.

Example 17

In the same manner as in Comparative Example 1, PTFE aqueous dispersion 1 was polymerized. Thereafter, the autoclave was opened, and 4 kg of the obtained PTFE aqueous dispersion 1 was transferred to another container, to which 0.2% aqueous $Na_2CO_3$ solution was added to adjust the pH to 5.6. Oxygen was removed from the system by repeatedly injecting nitrogen gas and degassing it several times. Then, under stirring, the temperature inside the vessel was raised, and when the temperature inside the vessel reached 80°C, an aqueous solution in which 1.2 g of ammonium persulfate [APS] was dissolved was pressurized into the vessel with nitrogen to set the pressure inside the vessel to 0.60 MPa. Heat treatment was carried out by stirring for 0.5 hours, thereby obtaining a PTFE aqueous dispersion. The solid concentration was 14.6% by mass.

Example 18

Except that the pH was adjusted to 7.0, a PTFE aqueous dispersion was obtained in the same manner as in Example 17. The solid concentration was 14.5% by mass.

Example 19

Except that the pH was adjusted to 9.0, a PTFE aqueous dispersion was obtained in the same manner as in Example 17. The solid concentration was 14.4% by mass.

Example 20

In the same manner as in Comparative Example 1, PTFE aqueous dispersion 1 was polymerized. The autoclave was opened, and 4 kg of the obtained PTFE aqueous dispersion 1 was transferred to another container, into which air was bubbled at a flow rate of 5 L/min for 1 hour to perform bubbling.

Thereafter, 0.2% aqueous $Na_2CO_3$ solution was added to adjust the pH to 5.6. Oxygen was removed from the system by repeatedly injecting nitrogen gas and degassing it several times. Then, under stirring, the temperature inside the vessel was raised, and when the temperature inside the vessel reached 80°C, an aqueous solution in which 1.2 g of ammonium persulfate [APS] was dissolved was pressurized into the vessel with nitrogen to set the pressure inside the vessel to 0.60 MPa. Heat treatment was carried out by stirring for 0.5 hours, thereby obtaining a PTFE aqueous dispersion. The solid concentration was 13.4% by mass.

Various physical properties of the PTFE aqueous dispersions or PTFE powders obtained in Examples and Comparative Examples were evaluated by the above-described methods. The results are shown in Tables 4 to 8.

[Table 4]

Table 4

| | | | Comparative Example 1 | Comparative Example 2 | Example 1 | Example 2 |
|---|---|---|---|---|---|---|
| Transfer of dispersion | | | Not performed | Not performed | Performed | Performed |
| Amount of polymerization radical | Int.[PTFE]/Int.[Mn2+]/sample weight | ($g^{-1}$) | - | - | 0 | 0 |
| Amount of oxidation radical | Int.[PTFE]/Int.[Mn2+]/sample weight | ($g^{-1}$) | - | - | 4.0 | 4.0 |
| Oxygen saturation degree | | (%) | 0 | 0 | 53.4 | 53.4 |
| Heat treatment | Amount of radical generator added | (mol times/fluorine-containing surfactant) | Not performed | 1 | 1 | 10 |
| | Temperature | (°C) | | 80 | 80 | 80 |
| | Time | (h) | | 3 | 3 | 3 |
| Content of compound represented by general formula (H4-1) in aqueous dispersion | C4 | (ppb/PTFE) | 1485 | 115 | Quantification limit or lower | Quantification limit or lower |
| | C5 | (ppb/PTFE) | Quantification limit or lower | Quantification limit or lower | Quantification limit or lower | Quantification limit or lower |
| | C6 | (ppb/PTFE) | 297 | 57 | Quantification limit or lower | Quantification limit or lower |
| | C7 | (ppb/PTFE) | Quantification limit or lower | 16 | Quantification limit or lower | Quantification limit or lower |
| | C8 | (ppb/PTFE) | 43 | 37 | Quantification limit or lower | Quantification limit or lower |
| | C9 | (ppb/PTFE) | Quantification limit or lower | 56 | Quantification limit or lower | Quantification limit or lower |
| | C10 | (ppblPTFE) | 182 | 60 | Quantification limit or lower | Quantification limit or lower |
| | C11 | (ppb/PTFE) | Quantification limit or lower | 26 | Quantification limit or lower | Quantification limit or lower |
| | C12 | (ppb/PTFE) | 387 | 14 | Quantification limit or lower | Quantification limit or lower |
| | C13 | (ppb/PTFE) | Quantification limit or lower | Quantification limit or lower | Quantification limit or lower | Quantification limit or lower |

(continued)

| | | | Comparative Example 1 | Comparative Example 2 | Example 1 | Example 2 |
|---|---|---|---|---|---|---|
| Transfer of dispersion | | | Not performed | Not performed | Performed | Performed |
| | C14 | (ppb/PTFE) | Quantification limit or lower | Quantification limit or lower | Quantification limit or lower | Quantification limit or lower |
| | C15 | (ppb/PTFE) | Quantification limit or lower | Quantification limit or lower | Quantification limit or lower | Quantification limit or lower |
| | C16 | (ppb/PTFE) | Quantification limit or lower | Quantification limit or lower | Quantification limit or lower | Quantification limit or lower |
| | C17 | (ppb/PTFE) | Quantification limit or lower | Quantification limit or lower | Quantification limit or lower | Quantification limit or lower |
| | C18 | (ppb/PTFE) | Quantification limit or lower | Quantification limit or lower | Quantification limit or lower | Quantification limit or lower |
| | C19 | (ppb/PTFE) | Quantification limit or lower | Quantification limit or lower | Quantification limit or lower | Quantification limit or lower |
| | C20 | (ppb/PTFE) | Quantification limit or lower | Quantification limit or lower | Quantification limit or lower | Quantification limit or lower |
| | C21 | (ppb/PTFE) | Quantification limit or lower | Quantification limit or lower | Quantification limit or lower | Quantification limit or lower |
| | Total | (ppb/PTFE) | 2394 | 381 | Quantification limit or lower | Quantification limit or lower |

[Table 5]

Table 5

| | | | Comparative Example 3 | Comparative Example 4 | Example 3 | Example 4 |
|---|---|---|---|---|---|---|
| Peak temperature | | (°C) | 329 | 329 | 329 | 329 |
| Melt viscosity | | (Pa·s) | $2.2 \times 10^4$ | $2.2 \times 10^4$ | $2.2 \times 10^4$ | $2.2 \times 10^4$ |
| Content of compound represented by general formula (H4-1) in powder | C4 | (ppb/PTFE) | Quantification limit or lower | Quantification limit or lower | Quantification limit or lower | Quantification limit or lower |
| | C5 | (ppb/PTFE) | Quantification limit or lower | Quantification limit or lower | Quantification limit or lower | Quantification limit or lower |
| | C6 | (ppb/PTFE) | Quantification limit or lower | Quantification limit or lower | Quantification limit or lower | Quantification limit or lower |
| | C7 | (ppb/PTFE) | Quantification limit or lower | Quantification limit or lower | Quantification limit or lower | Quantification limit or lower |
| | C8 | (ppb/PTFE) | Quantification limit or lower | Quantification limit or lower | Quantification limit or lower | Quantification limit or lower |
| | C9 | (ppb/PTFE) | Quantification limit or lower | Quantification limit or lower | Quantification limit or lower | Quantification limit or lower |
| | C10 | (ppb/PTFE) | Quantification limit or lower | Quantification limit or lower | Quantification limit or lower | Quantification limit or lower |
| | C11 | (ppb/PTFE) | Quantification limit or lower | Quantification limit or lower | Quantification limit or lower | Quantification limit or lower |
| | C12 | (ppb/PTFE) | 40 | Quantification limit or lower | Quantification limit or lower | Quantification limit or lower |
| | C13 | (ppb/PTFE) | Quantification limit or lower | Quantification limit or lower | Quantification limit or lower | Quantification limit or lower |
| | C14 | (ppb/PTFE) | 234 | 49 | Quantification limit or lower | Quantification limit or lower |
| | C15 | (ppb/PTFE) | Quantification limit or lower | 24 | Quantification limit or lower | Quantification limit or lower |
| | C16 | (ppb/PTFE) | 592 | 143 | Quantification limit or lower | Quantification limit or lower |
| | C17 | (ppb/PTFE) | Quantification limit or lower | 38 | Quantification limit or lower | Quantification limit or lower |
| | C18 | (ppb/PTFE) | 2152 | 102 | Quantification limit or lower | Quantification limit or lower |
| | C19 | (ppb/PTFE) | Quantification limit or lower | 19 | Quantification limit or lower | Quantification limit or lower |
| | C20 | (ppb/PTFE) | 759 | 29 | Quantification limit or lower | Quantification limit or lower |
| | C21 | (ppb/PTFE) | Quantification limit or lower | Quantification limit or lower | Quantification limit or lower | Quantification limit or lower |
| | Total | (ppb/PTFE) | 3777 | 404 | Quantification limit or lower | Quantification limit or lower |

[Table 6]

Table 6

| | | | Example 5 | Example 6 | Example 7 | Example 8 | Reference Example 5 | Example 9 | Example 10 | Example 11 | Example 12 |
|---|---|---|---|---|---|---|---|---|---|---|---|
| Transfer of dispersion | | | Performed | Performed | Performed | Performed | Performed | Performed | Performed | Performed | Performed |
| Bubbling | Gas | (-) | Not performed | Not performed | Air | Air | Nitrogen | Air | Air | Air | Air |
| | Flow rate | (L/min) | | | 2 | 2 | 5 | 5 | 5 | 5 | 5 |
| | Time | (h) | | | 1 | 1 | 1 | 0.1 | 0.5 | 1 | 2 |
| Amount of polymerization radical | Int.[PTFE]/Int.[Mn2+]/sample weight | ($g^{-1}$) | 0 | 0 | 0 | 0 | 0 | 0 | 0 | 0 | 0 |
| Amount of oxidation radical | Int.[PTFE]/Int.[Mn2+]/sample weight | ($g^{-1}$) | 4.0 | 4.0 | 7.0 | 7.0 | 6.4 | 6.5 | 7.0 | 7.2 | 7.0 |
| Oxygen saturation degree | | (%) | 53.4 | 53.4 | 97.3 | 97.3 | 87.4 | 88.5 | 97.4 | 97.4 | 97.4 |
| Heat treatment | Amount of radical generator added | (mol times/fluorine-containing surfactant) | 1 | 1 | 1 | 1 | 1 | 1 | 1 | 1 | 1 |
| | Temperature | (°C) | 80 | 80 | 80 | 80 | 80 | 80 | 80 | 80 | 80 |
| | Time | (h) | 1 | 0.5 | 0.5 | 1 | 0.5 | 0.5 | 0.5 | 0.5 | 0.5 |
| | C4 | (ppb/PTFE) | 65 | 840 | 366 | 19 | 430 | 445 | 206 | 118 | 116 |
| | C5 | (ppb/PTFE) | Quantification limit or lower | 44 | 42 | Quantification limit or lower | 50 | 38 | 26 | Quantification limit or lower | Quantification limit or lower |
| | C6 | (ppb/PTFE) | Quantification limit or lower | 259 | 63 | Quantification limit or lower | 91 | 62 | 23 | 23 | 21 |
| | C7 | (ppb/PTFE) | Quantification limit or lower | 27 | Quantification limit or lower | Quantification limit or lower | Quantification limit or lower | Quantification limit or lower | Quantification limit or lower | Quantification limit or lower | Quantification limit or lower |
| | C8 | (ppb/PTFE) | Quantification limit or lower | 105 | 24 | Quantification limit or lower | 58 | 34 | 18 | 17 | 15 |
| | C9 | (ppb/PTFE) | Quantification limit or lower | 29 | Quantification limit or lower | Quantification limit or lower | 15 | 29 | 14 | 17 | Quantification limit or lower |
| | C10 | (ppb/PTFE) | 17 | 138 | 40 | Quantification limit or lower | 59 | 57 | 31 | 13 | 16 |
| | C11 | (ppb/PTFE) | Quantification limit or lower | 39 | Quantification limit or lower | Quantification limit or lower | 57 | 53 | 20 | Quantification limit or lower | 16 |
| | C12 | (ppb/PTFE) | Quantification limit or lower | 84 | 28 | Quantification limit or lower | 31 | 47 | 22 | 17 | 14 |

(continued)

| | | | Example 5 | Example 6 | Example 7 | Example 8 | Reference Example 5 | Example 9 | Example 10 | Example 11 | Example 12 |
|---|---|---|---|---|---|---|---|---|---|---|---|
| Transfer of dispersion | | | Performed | Performed | Performed | Performed | Performed | Performed | Performed | Performed | Performed |
| Content of compound represented by general formula (H4-1) in aqueous dispersion | C13 | (ppb/PTFE) | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | C14 | (ppb/PTFE) | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | C15 | (ppb/PTFE) | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | C16 | (ppb/PTFE) | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | C17 | (ppb/PTFE) | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | C18 | (ppb/PTFE) | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | C19 | (ppb/PTFE) | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | C20 | (ppb/PTFE) | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | C21 | (ppb/PTFE) | Quantification limit or lower | Quantification limit or lower | Quantification limit or lower | Quantification limit or lower | Quantification limit or lower | Quantification limit or lower | Quantification limit or lower | Quantification limit or lower | Quantification limit or lower |
| | Total | (ppb/PTFE) | 82 | 1565 | 563 | 19 | 791 | 765 | 360 | 205 | 198 |

[Table 7]

Table 7

| | | | Example 13 | Example 14 | Example 15 | Example 16 |
|---|---|---|---|---|---|---|
| Transfer of dispersion | | | Performed | Performed | Performed | Performed |
| Addition of radical deactivating agent | Radical deactivating agent | (-) | $H_2O_2$ | $H_2O_2$ | MeOH | MeOH |
| | Amount added | (g) | 3.5 | 35.4 | 1.7 | 16.8 |
| Amount of polymerization radical | Int.[PTFE]Int.[Mn2+]/sample weight | ($g^{-1}$) | 0 | 0 | 0 | 0 |
| Amount of oxidation radical | Int.[PTFE]/Int.[Mn2+]/sample weight | ($g^{-1}$) | 7.0 | 7.2 | 39 | 2.6 |
| Oxygen saturation degree | | (%) | 90.0 | 93.0 | 88.0 | 88.0 |
| Heat treatment | Amount of radical generator added | (mol times/fluorine-containing surfactant) | 1 | 1 | 1 | 1 |
| | Temperature | (°C) | 80 | 80 | 80 | 80 |
| | Time | (h) | 0.5 | 0.5 | 0.5 | 0.5 |
| Content of compound represented by general formula (H4-1) in aqueous dispersion | C4 | (ppb/PTFE) | 726 | 731 | 677 | 682 |
| | C5 | (ppb/PTFE) | Quantification limit or lower | Quantification limit or lower | Quantification limit or lower | Quantification limit or lower |
| | C6 | (ppb/PTFE) | 263 | 133 | 146 | 132 |
| | C7 | (ppb/PTFE) | Quantification limit or lower | Quantification limit or lower | Quantification limit or lower | Quantification limit or lower |
| | C8 | (ppb/PTFE) | 244 | 109 | 108 | 107 |
| | C9 | (ppb/PTFE) | Quantification limit or lower | Quantification limit or lower | Quantification limit or lower | Quantification limit or lower |
| | C10 | (ppb/PTFE) | 237 | 186 | 207 | 212 |
| | C11 | (ppb/PTFE) | Quantification limit or lower | Quantification limit or lower | Quantification limit or lower | Quantification limit or lower |
| | C12 | (ppb/PTFE) | 54 | 41 | 49 | 39 |
| | C13 | (ppb/PTFE) | Quantification limit or lower | Quantification limit or lower | Quantification limit or lower | Quantification limit or lower |
| | C14 | (ppb/PTFE) | Quantification limit or lower | Quantification limit or lower | Quantification limit or lower | Quantification limit or lower |

(continued)

| | | | Example 13 | Example 14 | Example 15 | Example 16 |
|---|---|---|---|---|---|---|
| Transfer of dispersion | | | Performed | Performed | Performed | Performed |
| | C15 | (ppb/PTFE) | Quantification limit or lower | Quantification limit or lower | Quantification limit or lower | Quantification limit or lower |
| | C16 | (ppb/PTFE) | Quantification limit or lower | Quantification limit or lower | Quantification limit or lower | Quantification limit or lower |
| | C17 | (ppb/PTFE) | Quantification limit or lower | Quantification limit or lower | Quantification limit or lower | Quantification limit or lower |
| | C18 | (ppb/PTFE) | Quantification limit or lower | Quantification limit or lower | Quantification limit or lower | Quantification limit or lower |
| | C19 | (ppb/PTFE) | Quantification limit or lower | Quantification limit or lower | Quantification limit or lower | Quantification limit or lower |
| | C20 | (ppb/PTFE) | Quantification limit or lower | Quantification limit or lower | Quantification limit or lower | Quantification limit or lower |
| | C21 | (ppb/PTFE) | Quantification limit or lower | Quantification limit or lower | Quantification limit or lower | Quantification limit or lower |
| | Total | (ppb/PTFE) | 1524 | 1200 | 1187 | 1172 |

[Table 8]

Table 8

| | | | Example 6 | Example 17 | Example 18 | Example 19 | Example 20 |
|---|---|---|---|---|---|---|---|
| Transfer of dispersion | | | Performed | Performed | Performed | Performed | Performed |
| Bubbling | Gas | (-) | Not performed | Not performed | Not performed | Not performed | Air |
| | Flow rate | (L/min) | | | | | 5 |
| | Time | (h) | | | | | 1 |
| pH adjustment | Dispersion pH before APS radical decomposition | (-) | 3.4 | 5.6 | 7 | 9 | 5.6 |
| Amount of polymerization radical | Int.[PTFE)/Int.[Mn2+)/sample weight | ($g^{-1}$) | 0 | 0 | 0 | 0 | 0 |
| Amount of oxidation radical | Int.[PTFE]/Int.[Mn2+]/sample weight | ($g^{-1}$) | 4.0 | 4.0 | 4.0 | 4.0 | 7.2 |
| Oxygen saturation degree | | (%) | 53.4 | 53.4 | 53.4 | 53.4 | 97.4 |
| Heat treatment | Amount of radical generator added | (mol times/fluorine-containing surfactant) | 1 | 1 | 1 | 1 | 1 |
| | Temperature | (°C) | 80 | 80 | 80 | 80 | 80 |
| | Time | (h) | 0.5 | 0.5 | 0.5 | 0.5 | 0.5 |
| | C4 | (ppb/PTFE) | 840 | 339 | 544 | 1012 | 226 |
| | C5 | (ppb/PTFE) | 44 | 21 | 16 | 27 | Quantification limit or lower |
| | C6 | (ppb/PTFE) | 259 | 42 | 73 | 105 | 37 |
| | C7 | (ppb/PTFE) | 27 | Quantification limit or lower | Quantification limit or lower | 17 | Quantification limit or lower |
| | C8 | (ppb/PTFE) | 105 | 79 | 130 | 83 | Quantification limit or lower |
| | C9 | (ppb/PTFE) | 29 | 18 | 23 | 22 | Quantification limit or lower |
| | C10 | (ppb/PTFE) | 138 | 70 | 134 | 135 | Quantification limit or lower |
| | C11 | (ppb/PTFE) | 39 | Quantification limit or lower | 29 | 36 | Quantification limit or lower |
| | C12 | (ppb/PTFE) | 84 | 34 | 73 | 143 | 18 |

(continued)

| | | | Example 6 | Example 17 | Example 18 | Example 19 | Example 20 |
|---|---|---|---|---|---|---|---|
| Transfer of dispersion | | | Performed | Performed | Performed | Performed | Performed |
| Content of compound represented by general formula (H4-1) in aqueous dispersion | C13 | (ppb/PTFE) | Quantification limit or lower | Quantification limit or lower | Quantification limit or lower | Quantification limit or lower | Quantification limit or lower |
| | C14 | (ppb/PTFE) | Quantification limit or lower | Quantification limit or lower | Quantification limit or lower | Quantification limit or lower | Quantification limit or lower |
| | C15 | (ppb/PTFE) | Quantification limit or lower | Quantification limit or lower | Quantification limit or lower | Quantification limit or lower | Quantification limit or lower |
| | C16 | (ppb/PTFE) | Quantification limit or lower | Quantification limit or lower | Quantification limit or lower | Quantification limit or lower | Quantification limit or lower |
| | C17 | (ppb/PTFE) | Quantification limit or lower | Quantification limit or lower | Quantification limit or lower | Quantification limit or lower | Quantification limit or lower |
| | C18 | (ppb/PTFE) | Quantification limit or lower | Quantification limit or lower | Quantification limit or lower | Quantification limit or lower | Quantification limit or lower |
| | C19 | (ppb/PTFE) | Quantification limit or lower | Quantification limit or lower | Quantification limit or lower | Quantification limit or lower | Quantification limit or lower |
| | C20 | (ppb/PTFE) | Quantification limit or lower | Quantification limit or lower | Quantification limit or lower | Quantification limit or lower | Quantification limit or lower |
| | C21 | (ppb/PTFE) | Quantification limit or lower | Quantification limit or lower | Quantification limit or lower | Quantification limit or lower | Quantification limit or lower |
| | Total | (ppb/PTFE) | 1565 | 603 | 1022 | 1580 | 281 |

Figure 1 shows the first derivative spectra (horizontal axis: 5 value (-), vertical axis: Int. [PTFE]/Int. [$Mn^{2+}$]/sample weight ($g^{-1}$)) of the aqueous dispersions obtained in Examples 1, 9, 11, 15, and 16. From the results shown in Figure 1, it is seen that the first derivative spectra of the aqueous dispersions obtained by the production method of the present disclosure exhibit only a singlet, with no triplet observed. This result indicates that no polymerization radical is present in the aqueous dispersions, and that only the oxidation radical is present.

## Claims

**1.** A method for producing a low molecular weight polytetrafluoroethylene aqueous dispersion, the method comprising:

polymerizing tetrafluoroethylene in the presence of a fluorine-containing surfactant, a polymerization initiator, a hydrocarbon chain transfer agent, and an aqueous medium to prepare an aqueous dispersion containing a low molecular weight polytetrafluoroethylene;
subjecting the resulting aqueous dispersion to a pretreatment; and
adding a radical generator to a pretreated aqueous dispersion and subjecting an aqueous dispersion containing the radical generator to a heat treatment, thereby obtaining the low molecular weight polytetrafluoroethylene aqueous dispersion.

**2.** The production method according to claim 1, wherein the pretreatment of the aqueous dispersion is carried out by at least one of the following methods:

(1) a method in which the aqueous dispersion is brought into contact with a gas containing oxygen;
(2) a method in which the aqueous dispersion is brought into contact with an oxidizing agent;
(3) a method in which the aqueous dispersion is brought into contact with an alcohol; and
(4) a method in which a pH of the aqueous dispersion is adjusted to 4.0 or higher.

**3.** The production method according to claim 1 or 2, wherein the pretreatment of the aqueous dispersion is carried out by a method in which the aqueous dispersion is brought into contact with a gas containing oxygen, thereby obtaining the aqueous dispersion having an oxygen saturation degree of 50.0% or higher.

**4.** The production method according to any one of claims 1 to 3, wherein the pretreatment of the aqueous dispersion is carried out by bubbling a gas containing oxygen into the aqueous dispersion or by stirring the aqueous dispersion in air, thereby bringing the aqueous dispersion into contact with a gas containing oxygen.

**5.** The production method according to any one of claims 1 to 4, wherein the pretreatment of the aqueous dispersion is carried out by a method in which the aqueous dispersion is brought into contact with a gas containing oxygen, thereby obtaining the aqueous dispersion in which a content of a polymerization radical represented by general formula (1) is 0 $g^{-1}$ or less and a content of an oxidation radical represented by general formula (2) is 0.1 $g^{-1}$ or more:

General formula (1): $R\text{-}(CF_2\text{-}CF_2)_n\cdot$ (wherein R is a monovalent group, n is an integer of 1 or more, and · represents an unpaired electron); and
General formula (2): $R\text{-}(CF_2\text{-}CF_2)_nO\text{-}O\cdot$ (wherein R is a monovalent group, n is an integer of 1 or more, and · represents an unpaired electron).

**6.** The production method according to claim 1 or 2, wherein the pretreatment of the aqueous dispersion is carried out by a method in which the aqueous dispersion is brought into contact with an oxidizing agent, thereby obtaining the aqueous dispersion having an oxygen saturation degree of 50.0% or higher.

**7.** The production method according to claim 2 or 6, wherein the oxidizing agent is hydrogen peroxide.

**8.** The production method according to any one of claims 1, 2, 6, and 7, wherein the pretreatment of the aqueous dispersion is carried out by a method in which the aqueous dispersion is brought into contact with an oxidizing agent, thereby obtaining the aqueous dispersion in which a content of a polymerization radical represented by general formula (1) is 0 $g^{-1}$ or less and a content of an oxidation radical represented by general formula (2) is 0.1 $g^{-1}$ or more:

General formula (1): $R\text{-}(CF_2\text{-}CF_2)_n\cdot$ (wherein R is a monovalent group, n is an integer of 1 or more, and · represents an unpaired electron); and

General formula (2): $R-(CF_2-CF_2)_nO-O\cdot$ (wherein R is a monovalent group, n is an integer of 1 or more, and · represents an unpaired electron).

**9.** The production method according to claim 1 or 2, wherein the pretreatment of the aqueous dispersion is carried out by a method in which the aqueous dispersion is brought into contact with an alcohol, thereby obtaining an aqueous dispersion having an oxygen saturation degree of 50.0% or higher.

**10.** The production method according to claim 2 or 9, wherein the alcohol is at least one selected from the group consisting of methanol, ethanol, 1-propanol, 2-propanol, 1-butanol, and 2-butanol.

**11.** The production method according to any one of claims 1 to 10, wherein the polymerization initiator is a water-soluble radical polymerization initiator.

**12.** The production method according to any one of claims 1 to 11, wherein a temperature of the heat treatment is equal to or higher than a decomposition temperature of the radical generator.

**13.** The production method according to any one of claims 1 to 12, wherein the radical generator is an inorganic peroxide.

**14.** The production method according to any one of claims 1 to 13, wherein the low molecular weight polytetrafluoroethylene has a peak temperature of 322 to 333°C.

**15.** The production method according to any one of claims 1 to 14, wherein the low molecular weight polytetrafluoroethylene has a melt viscosity at 380°C of $1 \times 10^2$ to $7 \times 10^5$ Pa·s.

**16.** The production method according to any one of claims 1 to 15, wherein the polymerization initiator is a persulfate, the hydrocarbon chain transfer agent is an alkane having 1 to 5 carbon atoms, and the pretreatment is carried out by the method (1) in which the aqueous dispersion is brought into contact with a gas containing oxygen, thereby obtaining the aqueous dispersion having an oxygen saturation degree of 50.0% or higher.

**17.** The production method according to any one of claims 1 to 16,

wherein the polymerization initiator is a persulfate and the hydrocarbon chain transfer agent is an alkane having 1 to 5 carbon atoms,
wherein, after preparing the aqueous dispersion containing the low molecular weight polytetrafluoroethylene, the pretreatment of the aqueous dispersion is carried out by:

(1-1-1) recovering the aqueous dispersion in a reactor and accommodating it in a container different from the reactor, thereby bringing the aqueous dispersion into contact with a gas containing oxygen to obtain the aqueous dispersion having an oxygen saturation degree of 50.0 to 70.0%,
and then
(1-1-2) bubbling a gas containing 20 to 100% by volume of oxygen into the aqueous dispersion at a flow rate of 1 to 30 L/min to generate bubbles and bring the aqueous dispersion into contact with the gas containing oxygen at 5 to 99°C for 5 minutes or longer; or
(2-1) bringing the aqueous dispersion into contact with hydrogen peroxide in an amount corresponding to 1 to 500 ppm by mass ppm based on a mass of the aqueous dispersion at 5 to 99°C for 1 minute or longer; or
(3-1) bringing the aqueous dispersion into contact with an alcohol having 1 to 10 carbon atoms in an amount corresponding to 1 to 500 ppm by mass based on a mass of the aqueous dispersion at 5 to 99°C for 1 minute or longer; or
(4-1) adding an alkali to the aqueous dispersion to adjust a pH of the aqueous dispersion to 4.0 or higher, thereby obtaining an aqueous dispersion having an oxygen saturation degree of 80% or higher, and

wherein a persulfate is added to the pretreated aqueous dispersion in an amount of 0.01 to 5 mol times per mole of the fluorine-containing surfactant in the aqueous dispersion, and the aqueous dispersion containing the persulfate is subjected to the heat treatment at 35 to 95°C for 15 minutes or longer, thereby obtaining the low molecular weight polytetrafluoroethylene aqueous dispersion.

**18.** A method for producing a powder of the low molecular weight polytetrafluoroethylene, the method comprising:

obtaining the low molecular weight polytetrafluoroethylene aqueous dispersion by the production method according to any one of claims 1 to 17;
then coagulating the low molecular weight polytetrafluoroethylene in the aqueous dispersion, thereby producing a wet powder containing particles of the low molecular weight polytetrafluoroethylene; and
drying the wet powder, thereby producing the powder.

Figure 1

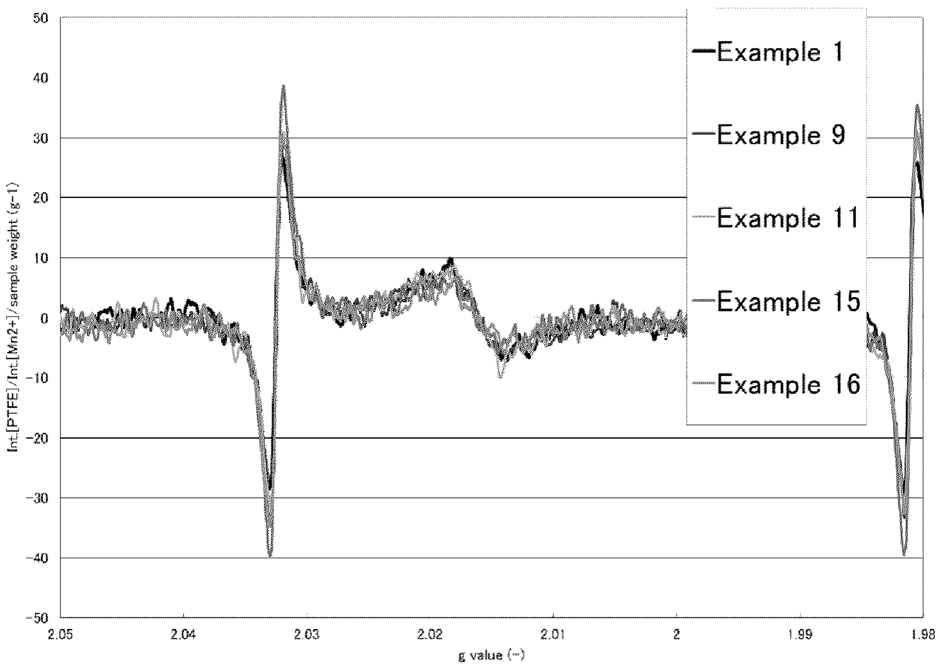

50
40
30
20
10
0
-10
-20
-30
-40
-50
Int.[PTFE]/Int.[Mn2+]/sample weight (g-1)
2.05
2.04
2.03
2.02
2.01
2
1.99
1.98
g value (-)
Example 1
Example 9
Example 11
Example 15
Example 16

## INTERNATIONAL SEARCH REPORT

International application No.
**PCT/JP2024/005063**

### A. CLASSIFICATION OF SUBJECT MATTER

***C08F 6/16***(2006.01)i; ***C08F 8/06***(2006.01)i; ***C08F 14/26***(2006.01)i
FI: C08F6/16; C08F8/06; C08F14/26

According to International Patent Classification (IPC) or to both national classification and IPC

### B. FIELDS SEARCHED

Minimum documentation searched (classification system followed by classification symbols)

C08F6/16; C08F8/06; C08F14/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br><br>A | WO 2022/163814 A1 (DAIKIN INDUSTRIES, LTD.) 04 August 2022 (2022-08-04)<br>claims, examples | 1-3, 5, 11-16, 18<br><br>4, 6-10, 17 |
| A | WO 2009/020187 A1 (DAIKIN INDUSTRIES, LTD.) 12 February 2009 (2009-02-12)<br>claims, examples | 1-18 |
| A | WO 2022/163815 A1 (DAIKIN INDUSTRIES, LTD.) 04 August 2022 (2022-08-04)<br>claims, examples | 1-18 |
| A | JP 2010-180364 A (DAIKIN INDUSTRIES, LTD.) 19 August 2010 (2010-08-19)<br>claims, examples | 1-18 |
| A | JP 2023-501048 A (GUJARAT FLUOROCHEMICALS LIMITED) 18 January 2023 (2023-01-18)<br>claims, examples | 1-18 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/005063**

**C. DOCUMENTS CONSIDERED TO BE RELEVANT**

| Category* | Citation of document, with indication, where appropriate, of the relevant passages | Relevant to claim No. |
|---|---|---|
| P, X<br>P, A | WO 2024/024916 A1 (DAIKIN INDUSTRIES, LTD.) 01 February 2024 (2024-02-01) claims, examples | 1-3, 5, 11-16, 18<br>4, 6-10, 17 |
| P, A | WO 2024/024917 A1 (DAIKIN INDUSTRIES, LTD.) 01 February 2024 (2024-02-01) claims, examples, paragraphs [0005]-[0006], [0185] | 1-18 |
| P, A | WO 2024/024891 A1 (DAIKIN INDUSTRIES, LTD.) 01 February 2024 (2024-02-01) claims, examples | 1-18 |

Form PCT/ISA/210 (second sheet) (July 2022)

**INTERNATIONAL SEARCH REPORT**
**Information on patent family members**

International application No.
**PCT/JP2024/005063**

| Patent document cited in search report | Publication date (day/month/year) | Patent family member(s) | Publication date (day/month/year) |
|---|---|---|---|
| WO 2022/163814 A1 | 04 August 2022 | US 2023/0348636 A1<br>claims, examples<br>EP 4286425 A1<br>CN 116761828 A | |
| WO 2009/020187 A1 | 12 February 2009 | US 2010/0204345 A1<br>claims, examples<br>US 2015/0183898 A1<br>CN 101772520 A | |
| WO 2022/163815 A1 | 04 August 2022 | US 2023/0348637 A1<br>claims, examples<br>EP 4286426 A1<br>CN 116670181 A | |
| JP 2010-180364 A | 19 August 2010 | (Family: none) | |
| JP 2023-501048 A | 18 January 2023 | EP 4031589 A1<br>claims, examples<br>GB 2604463 A<br>CN 114450317 A<br>KR 10-2022-0065003 A | |
| WO 2024/024916 A1 | 01 February 2024 | (Family: none) | |
| WO 2024/024917 A1 | 01 February 2024 | (Family: none) | |
| WO 2024/024891 A1 | 01 February 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022163814 A
- WO 2022163815 A
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531
- WO 2013189824 A
- WO 2013189826 A
- WO 2019161153 A
- WO 2009020187 A